(19) **Europäisches Patentamt**

**European Patent Office**

**Office européen des brevets**

(11) **EP 0 862 262 B1**

(12) **EUROPEAN PATENT SPECIFICATION**

(45) Date of publication and mention
of the grant of the patent:
**09.07.2003 Bulletin 2003/28**

(51) Int Cl.⁷: **H02M 7/217**, H02M 3/156,
G04C 10/00, G04G 1/00,
H02J 7/14

(21) Application number: **98300915.0**

(22) Date of filing: **09.02.1998**

(54) **Power generating device including a chopper amplifier, charging method and timepiece**

Leistungserzeugungsvorrichtung mit einem Zerhacker-Verstärker, Ladeverfahren und
Zeitmessvorrichtung

Dispositif de génération de puissance incluant un amplificateur à découpage, méthode de charge et
dispositif de mesure de temps

(84) Designated Contracting States:
**CH DE FR GB LI**

(30) Priority: **07.02.1997 JP 2568097**
**24.12.1997 JP 35573597**

(43) Date of publication of application:
**02.09.1998 Bulletin 1998/36**

(73) Proprietor: **SEIKO EPSON CORPORATION**
**Tokyo 163 (JP)**

(72) Inventors:
• **Shinkawa, Osamu**
**Suwa-shi, Nagano-ken 392 (JP)**
• **Fujisawa, Teruhiko**
**Suwa-shi, Nagano-ken 392 (JP)**
• **Uetake, Akihito**
**Suwa-shi, Nagano-ken 392 (JP)**

(74) Representative: **Sturt, Clifford Mark et al**
**Miller Sturt Kenyon**
**9 John Street**
**London WC1N 2ES (GB)**

(56) References cited:
GB-A- 2 289 581         JP-A- 6 300 865
US-A- 5 179 508

**Description**

The present invention relates to a power generating device having a power generating portion provided with a dynamo coil which generates electricity, for example, upon a rotor being rotated with kinetic energy produced by a rotating weight or the like, and also relates to a timing device using the power generating device.

GB-A-2 289 581 discloses a power generating device as specified in the preamble of claim 1 having a combination of an alternator and a boost converter, the latter including a chopper amplifier. The necessary inductance in the convertor circuit is provided by the self-inductance of the alternator, thus allowing the normally separately provided inductance/s to be omitted.

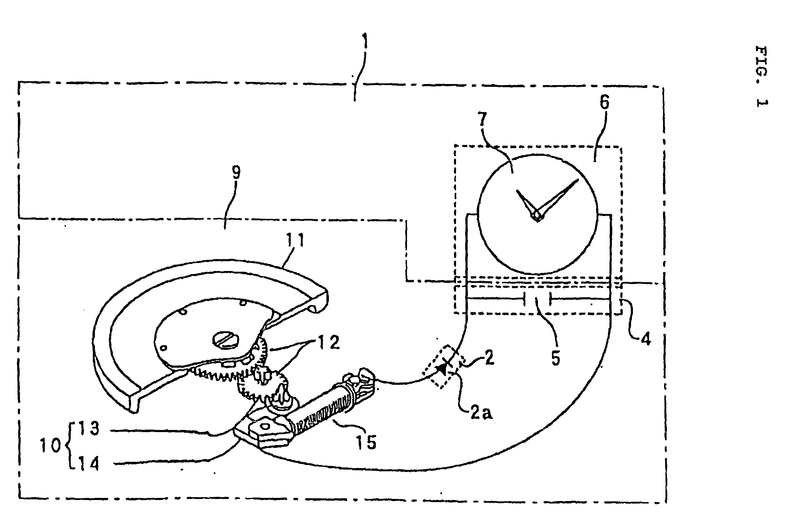

In the field of small-size, portable electronic equipment such as wrist watches, there has been devised and practised a portable equipment which has a power generating device built therein and does not need replacement of a battery or a battery itself any more. Fig. 1 shows, as one example of such portable electronic equipment, a schematic construction of a timing device 1 with a power generating device 9 built therein. The illustrated portable electronic equipment (timing device) 1 includes a rotating weight 11 arranged to turn within a case of the timing device. The turning movement of the rotating weight 11 is transmitted to a rotor 13 of a dynamo 10 via a wheel train mechanism 12. In the dynamo 10, as the rotor 13 rotates, an electromotive voltage is generated in a dynamo coil 15 provided on a stator 14. An alternating current output from the dynamo 10 is rectified by a rectifying portion 2 including a rectifier diode 2a and then charged in a charging portion 4 including a large-capacity capacitor 5. A functioning device 6 such as a timepiece 7 can be operated by utilizing electric power from the charging portion 4 of the power generating device 9. The dynamo 10 comprises the rotor 13, which is disk-shaped and has permanent magnets of two poles, for example, and the stator 14. Rotation of the rotor 13 generates an electromotive voltage in the dynamo coil 15 of the stator 14, enabling an alternating current to be output from the dynamo coil 15.

In the power generating device of the above type producing electric power upon the rotation of the rotor, the rectifying portion 2 may be constituted by alternative rectifier circuits, such as a full-wave rectifier circuit or a voltage doubling rectifier circuit, rather than the full-wave rectifier circuit shown in Fig. 1, for converting kinetic energy applied to the rotating weight 11 into electrical energy with higher efficiency.

In the above described conventional power generating device 9, however, when an electricity accumulating member (large-capacity capacitor) 5 of the charging portion 4, serving as a secondary power supply portion, is charged up to a certain voltage value, the electromotive voltage generated in the dynamo coil 15 cannot be charged in the large-capacity capacitor 5 any more unless it rises over a charged voltage value Vsc of the large-capacity capacitor 5. It therefore occurs in many cases that kinetic energy caught by the rotating weight 11 cannot be converted into electrical energy efficiently.

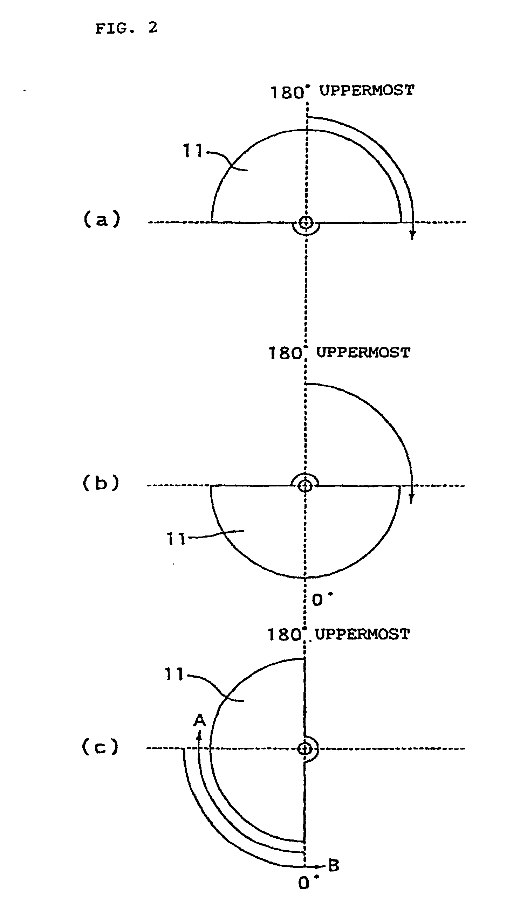

Fig. 2 shows one example of movement of the rotating weight 11 of the timing device 1. Assume now that, as shown in Fig. 2(a), the rotating weight 11 is set to lie in a vertical plane and is moved by gravity after being raised up to its uppermost position (180 degrees). On this condition, after the rotating weight 11 has been moved once by gravity, there are two cases in one of which the rotating weight 11 stops at a position of 0 degree as shown in Fig. 2(b), and in the other of which the rotating weight 11 overshoots several degrees to several tens of degrees beyond the position of 0 degree as shown in Fig. 2(c). In the case of Fig. 2(b), potential energy applied to the rotating weight 11 by being raised up to the position of 180 degrees is converted into kinetic energy through movement of the rotating weight 11 by gravity. The kinetic energy is all converted into electrical energy and mechanical losses produced by bearing and wheel train mechanisms, etc. of the rotor and other losses.

On the contrary, in the case of Fig. 2(c), even after the rotating weight 11 has moved by gravity and reached the position of 0 degree, the rotating weight 11 still has kinetic energy stored therein and overshoots several degrees to several tens of degrees beyond the position of 0 degree. Stated otherwise, most of the kinetic energy is not converted into electrical energy and a great part of the kinetic energy that has not been utilized for electricity generation remains stored in the rotating weight 11. In the case of Fig. 2(c), the overshoot of the rotating weight 11 repeats damped oscillation and gradually settles to the position of 0 degree. At this time, the kinetic energy stored in the rotating weight 11 is consumed little by little as mechanical losses in the bearing and wheel train mechanisms, etc. of the rotor and other losses. The electromotive voltage is also lowered little by little. Therefore, the kinetic energy stored in the rotating weight 11 is not efficiently converted into electrical energy for charging in the charging portion 4.

Accordingly, once the charging portion 4 is charged up to a certain level, it has been conventional that even when the rotating weight 11 catches, as its kinetic energy, a motion of the user of the wrist watch device 1, the kinetic energy of the rotating weight 11 cannot be utilized at all if the electromotive voltage generated in the dynamo coil 15 is such a small amount as not to exceed the charged voltage of the charging portion 4.

Further, where the timing device 1 shown in Fig. 1 is practically used as a wrist watch, a wrist motion of the user which makes the rotating weight 11 end with one stroke or movement by gravity from the uppermost position, as with the case of Fig. 2b, is rare and the wrist motion is usually a continuous motion. Once the charged voltage Vsc of the charging portion 4 becomes sufficiently high, therefore, when a potential difference between the charged voltage Vsc and the electromotive voltage Vg generated in the dynamo coil 15 is small; the wrist motion of the user occurs in many cases such that at the timing at which the rotating weight 11 overshoots as indicated by an arrow A, the rotating weight 11 is forced to move oppositely in the direction of an arrow B, as shown in Fig. 2(c). The kinetic energy given to the rotating weight 11 upon such a continuous motion of the user's wrist is reduced as a result of forces in the directions of the arrows A and B cancelling each other. This makes it difficult to produce electric power by catching a motion of the user's wrist or the like with high efficiency.

On the other hand, when the electromotive voltage Vg generated in the dynamo coil 15 is sufficiently larger than the charged potential Vsc of the charging portion 4, a high charging brake is applied to the rotating weight 11 and the dropping speed of the rotating weight 11 is quickly slowed down. In this case, the kinetic energy caught by the rotating weight 11 through one stroke or drop motion can be utilized as electrical energy very efficiently, but the time required until the charging process ends and the rotating weight 11 completes one stroke or drop motion is long. As mentioned above, the motion of the user's wrist rarely ends with the rotating weight 11 completing one stroke or movement by gravity and is usually a continuous motion. Accordingly, even if a large amount of charge is obtained with one stroke or drop motion of the rotating weight 11, the charging time is so long that the movement of the rotating weight 11 cannot follow the continuous wrist motion. Therefore, the rotating weight 11 cannot efficiently catch, as its kinetic energy, the wrist motion and the efficiency of converting the wrist motion into electrical energy is reduced.

Japanese Unexamined Patent Publication No. 6-300865 describes an electronic watch with a power generating device for converting mechanical energy, that is obtained from a weight by utilizing a motion of the human body or gravity, into electrical energy through relative movement of a magnet and a coil. In that arrangement movement of the magnet is detected to control an amount of load applied to the magnet upon power generation by the power generating device. Specifically, it is disclosed that the electromotive voltage generated by a dynamo is compared with the charged voltage of a capacitor serving as an electricity accumulating member. A transistor is provided to connect and disconnect a dynamo coil to or from the electricity accumulating member or load. With the provision of such a transistor switch, when the transistor is electrically conducting or closed, a charging current flows to generate a charging brake applied to the rotating weight 11. When the transistor is not electrically conducting or made open, no charging current flows and a load such as charging brake is not applied to the rotating weight 11. Accordingly, the charging efficiency can be improved by controlling those two conditions in a proper manner.

When an input motion applied to the rotating weight 11 is so small that no electricity can be charged with an ordinary rectifier circuit, the transistor is controlled to be made open to reduce a load of the rotating weight 11. This causes the rotating weight 11 to freely turn. When a large input motion is applied to the rotating weight 11, the transistor is controlled to be electrically conducting. By so controlling the transistor, during a period in which the transistor is made open, the kinetic energy of the rotating weight 11 is not utilized for charging of electricity and no charging brake is applied to the rotating weight 11. Therefore, the rotating weight 11 continues its motion with kinetic energy remaining stored therein. However, part of the kinetic energy stored in the rotating weight 11 is consumed as mechanical losses produced by the bearing and wheel train mechanisms, etc. of the rotor and other losses. Further, the kinetic energy given to the rotating weight 11 upon the continuous motion of the user's wrist is consumed as a result of forces in the directions of the arrows A and B cancelling each other, as explained above. Accordingly, even under the above control, when the kinetic energy is small and the electromotive voltage of the dynamo coil 15 is not higher than the voltage charged in the capacitor, charging of electricity can be hardly effected.

Conversely, it is also possible to control the transistor to be made open when an input motion applied to the rotating weight 11 is large and the electromotive voltage is providing a large amount of charge, causing the rotating weight 11 to freely turn without undergoing a load. Similarly, it is possible to control the transistor to be electrically conducting when a relatively small input motion is applied to the rotating weight 11. This control not only provides the possibility that a greater amount of kinetic energy can be stored in the rotating weight 11, but can also reduce the charging brake applied to the rotating weight 11 when a large amount of charge is charged as electrical energy. This is because electricity is charged in the capacitor only during the period in which the transistor is electrically conducting. With the above control, however, the amount of charge itself is reduced. Specifically, a large amount of charge which can be obtained upon a large input motion being applied to the rotating weight 11 is reduced down to a level comparable to an effect achieved with a reduced input motion of the rotating weight 11. This is because the end of the dynamo coil is kept disconnected from the capacitor during the large input motion. Also, the fact that charging of electricity cannot be effected when the electromotive voltage of the dynamo coil is not higher than the voltage charged in the capacitor is similarly true regardless of whether the transistor is controlled to be electrically conducting or made open under such a condition. Thus, even with the above-mentioned control, it is difficult to produce kinetic energy efficiently by using the rotating weight and convert the kinetic energy into electrical energy for charging the capacitor with high efficiency.

The above explanation can equally be applied to any type of power generating devices wherein an electromotive voltage is produced in a dynamo coil by converting kinetic energy with other means, such as a spring or wind force, rather than rotating weight. In portable electronic equipment (timing devices) with any of those power generating devices built therein as a power supply, even though the user carries the timing device thereby causing the rotating weight to turn, electricity is hardly charged in the charging portion 4 if an input motion is always applied only in small amounts to the rotating weight. This has the result that the timing device may fail to operate or cease to function while the user is carrying it.

In view of the above, an object of the present invention is to provide a power generating device which can charge electricity in a charging portion even when an electromotive voltage generated in a dynamo coil is so small as not to exceed a charged voltage of the charging portion. Further, it is an object which, when means for catching kinetic energy, such as a rotating weight, is under a continuous motion, the resulting kinetic energy can be efficiently converted into electrical energy without causing either overshoot nor unnecessary charging brake. Another object is to provide a power generating device and a charging method which enable electricity to be charged with means optimum for charging on the basis of the relationship between the electromotive voltage and the charged voltage. Still another object is to provide a power generating device which can minimize the loss produced by the forward voltage across a diode for rectifying an alternating current. A further object of the present invention is to employ, in a timing device, a power generating device having a high charging ability and to provide a timing device which does not require battery replacement, is small in size, and has high reliability.

Embodiments of the present invention will now be described, by way of example only and with reference to the accompanying drawings, in which:-

Fig. 1 is a view schematically showing a portable electronic equipment (timing device) provided with a power generator built therein.
Fig. 2 is a representation showing operation of a rotating weight when it is moved by gravity.
Fig. 3 is a block diagram showing a circuit configuration of a timing device according to a first embodiment of the present invention.
Fig. 4 is a block diagram showing a circuit configuration of a different power generating device from that shown in Fig. 3.
Fig. 5 is a graph showing calculated results of a voltage boosted under chopper control.
Fig. 6 is a diagram showing one example of configuration of a duty setting portion.
Fig. 7 is a chart showing waveforms of voltage and current in the circuit shown in Fig. 3 when a switch portion is not operated.
Fig. 8 is a chart showing waveforms of voltage and current in the circuit shown in Fig. 3 when the switch portion is operated.
Fig. 9 is a block diagram showing a circuit configuration of a timing device according to a second embodiment of the present invention.
Fig. 10 is a chart showing waveforms of voltage and current in the circuit shown in Fig. 9 when a switch portion is not operated.
Fig. 11 is a chart showing a waveform of a charged voltage of a voltage doubling capacitor in the circuit shown in Fig. 9.
Fig. 12 is a chart showing waveforms of voltage and current in the circuit shown in Fig. 9 when the switch portion is operated.
Fig. 13 is a block diagram showing a circuit configuration of a power generating device according to a third embodiment of the present invention.
Fig. 14 is a timing chart showing one example of control for the power generating device shown in Fig. 13.
Fig. 15 is a block diagram showing a circuit configuration of a power generating device according to a fourth embodiment of the present invention.
Fig. 16 is a diagram showing one example of circuit for an overcharged voltage determining portion.
Fig. 17 is a timing chart showing one example of control for the power generating device shown in Fig. 15.

To achieve the above mentioned objects, in the present invention, an electromotive voltage generated by a power generating portion is chopper-amplified to produce a higher voltage than a charged voltage. Output terminals of the power generating portion are short-circuited intermittently to prevent a charging brake from being uselessly applied to a rotating weight. More specifically, a power generating device according to an embodiment of the present invention comprises: a power generating portion including a dynamo coil; a switch portion capable of short-circuiting between output terminals of the power generating portion; a controller capable of controlling the switch portion; a rectifying portion for rectifying an output of the power generating portion; and a charging portion capable of accumulating rectified electric power. The controller has a chopper control function capable of cyclically turning on/off the switch portion. The power generating portion can produce electric power upon the dynamo coil catching magnetic flux fluctuating with kinetic energy imparted to the rotating weight or the like. In a portable power generating device, electric power can be produced by catching energy in such various forms as motions and vibrations of the user's body, movements of wind, and vibrations of vehicles.

Also, by turning on/off the switch portion at a predetermined cycle, the electromotive voltage of the dynamo coil can be increased through chopper boosting with the aid of inductance of the dynamo coil of the power generating portion, i.e., energy stored in the dynamo coil. Therefore, even when kinetic energy of the rotating weight is too small to provide a higher electromotive voltage than the charged voltage of the charging portion, the electromotive voltage can be increased through the chopper boosting up to a level sufficient to effect charging for conversion of kinetic energy into electrical energy. Accordingly, even when the electromotive voltage is lower than the charged voltage, kinetic energy caught by the rotating weight or the like is not merely consumed as mechanical losses etc. Part of the kinetic energy can be taken out as electrical energy, resulting in improved efficiency of power generation.

The chopper boosting operation is carried out such that when the rotating weight is in useless movement such as overshooting, both the terminals of the dynamo coil are electrically conducting (short-circuited) to accumulate or charge kinetic energy, that is stored in the rotating weight, into the inductance of the dynamo coil as electrical energy. At this time, because a short-circuiting current flows through the dynamo coil, a charging brake is applied to the rotating weight and overshooting of the rotating weight is suppressed. Then, by making both the terminals of the dynamo coil electrically non-conducting, the electrical energy stored in the dynamo coil can be taken out as a spike-like boosted voltage and charged in the charging portion. Such a sequence of chopper boosting operation is also effective to reduce an offset phenomenon of kinetic energy generated during continuous motion. Thus, since an appropriate charging brake is applied to the rotating weight by charging electricity while repeatedly short-circuiting both the terminals of the dynamo coil, kinetic energy of the rotating weight is less offset during its continuous motion. The efficiency of using user's motion and converting kinetic energy into electrical energy can thus be improved.

The switch portion can be made up of any type of switching elements which can be electrically conducting (turned on) and electrically non-conducting (turned off), such as bipolar transistors or MOSFETs. The switch portion is required to be blocked from being electrically conducting in the opposite direction with respect to the rectifying portion. Accordingly, it is desired to block the switch portion from being electrically conducting in the opposite direction with respect to the rectifying portion by providing a polarity determining portion, which determines the polarity of the electromotive voltage of the power generating portion, to turn on/off the switch portion at the proper timing, or by connecting a diode in series to the switching element.

It is feasible that the chopper control is always carried out to produce a high electromotive voltage regardless of the magnitude of kinetic energy imparted to the rotating weight or the like. From the viewpoint of reducing the electric power consumed by the switch portion for the chopper control, however, the chopper control is preferably ceased when kinetic energy is obtained at such a level as is able to effect charting without the boosting. For this reason, it is preferable that the controller has a determining function for determining the electromotive voltage of the power generating portion, and stops the chopper control function when the charging portion can be charged with the electromotive voltage of the power generating portion. When the electromotive voltage generated in the dynamo coil upon a user's motion etc. is capable of exceeding the charged voltage of the charging portion, the charging portion can be charged with the electromotive voltage itself without the boosting. By stopping the chopper control in such a case, a charging brake otherwise produced upon short-circuiting between both the terminals of the dynamo coil is not applied to the rotating weight. Also, because of the chopper control being stopped, the electromotive voltage is not boosted. Accordingly, a potential difference between the charged voltage of the charging portion and the electromotive voltage supplied from the dynamo coil is not increased, which is effective to prevent a charging time from being prolonged unnecessarily. Thus, providing the determining function of determining the electromotive voltage makes it possible, when only a small amount of kinetic energy that cannot effect charging through the normal rectifying operation, for the electromotive voltage to be boosted under the chopper control while reducing useless movements of the rotating weight such as overshooting. Thus, the kinetic energy imparted to the rotating weight is effectively stored and converted into electrical energy. As a result, useless movements of the rotating weight can be reduced without reducing kinetic energy imparted thereto, and the kinetic energy can be converted into electrical energy with high efficiency.

The determining function may compare the electromotive voltage of the power generating portion with the charged voltage of the charging portion. Also, the electromotive voltage of the power generating portion may be compared with a predetermined first setting voltage at which the electromotive voltage is judged to be able to effect charging. The setting voltage can be provided by a voltage which does not depend on the charged voltage, e.g., the Zener voltage of a diode. Furthermore, the determining function may determine the electromotive voltage of the power generating portion by detecting a voltage drop across a diode, a resistance, etc. in a power supply circuit with respect to the charging portion.

In addition, the controller may determine the charged voltage of the charging portion, and turn on the switch portion when the charged voltage exceeds a second setting voltage beyond which the charged voltage is judged to be excessive. This arrangement enables the switch portion to be used for protection against an overvoltage.

The rectifying portion of the power generating device of the present invention can employ any suitable type of rectification methods such as half-wave, voltage doubling or full-wave rectification. When the rectifying portion performs full-wave rectification, by a combination of rectifier diodes and rectifier switches connected to upstream and downstream of output terminals of the power generating portion, the above-mentioned chopper control and protection against overvoltage can be achieved by providing the controller with a polarity determining function capable of determining the polarity of the electromotive voltage of the power generating portion, and controlling the rectifier switch of the rectifying portion on the off-side to serve as the switch portion. With this feature, the circuit is simplified, loss caused by the forward voltage across the diode for preventing a reverse current can be reduced, and hence the charging efficiency can be improved. Further, the rectifying portion may include a rectifier diode and a bypass switch bypassing the rectifier diode; the bypass switch being turned on when a forward current flows through the rectifier diode. With this feature, loss caused by the forward voltage across the rectifier diode can be reduced.

In a timing device having a timing portion capable of operating using electric power supplied from the charging portion, the controller may perform the chopper control using part of the oscillation signals provided for timing in the timing portion, either from an oscillation circuit or a frequency dividing circuit. The power generating device of the present invention can produce electric power by catching the user's motion, or the like, efficiently and accumulating the electric power in the charging portion. By utilizing the charged energy in the charging portion, it is possible stably to operate not only a timing portion with digital representation, but also a timing portion with analog representation. This includes a timing circuit for outputting motor driving pulses and a hand rotating motor for rotating clock hands by the motor driving pulses. As a result, there can be provided a highly reliable timing device which includes a power generating device built therein. The problem of a timing device stopping while the user is carrying it because the user's motion is small, can be mitigated and operating performance in a user-carrying condition can be improved.

First Embodiment

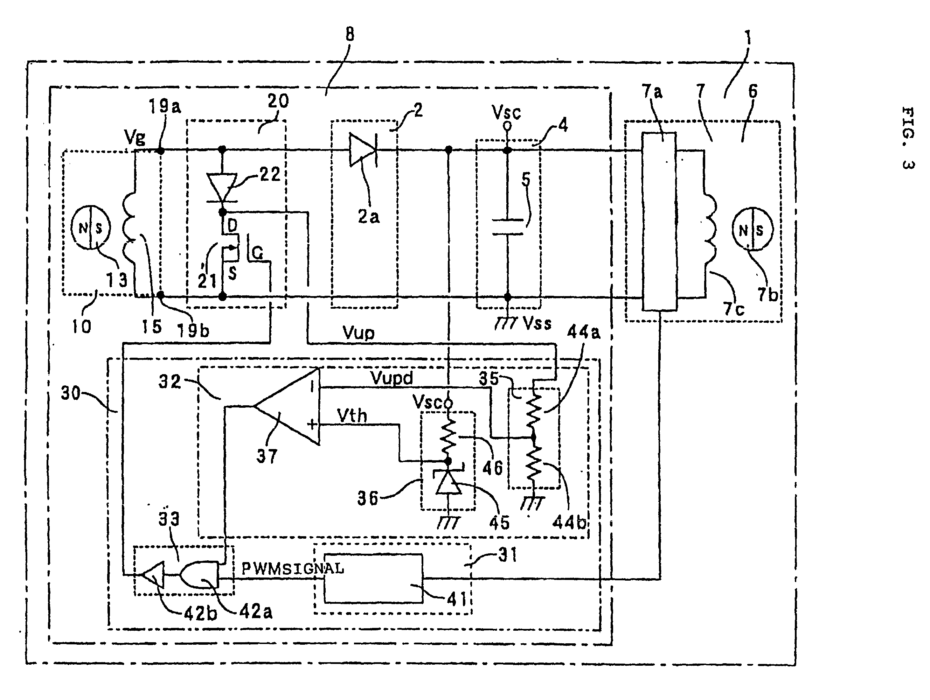

Fig. 3 is a block diagram showing one example of circuit configuration of a timing device to which the present invention is applied. The timing device 1 of this embodiment comprises a power generating device 8 and a functioning unit 6 capable of operating by electric power supplied from the power generating device 8. For example, unit 6 is a timepiece 7 capable of indicating the time in analog representation, with a motor including a rotor 7b and a stator 7c. The power generating device 8 of this embodiment comprises: a dynamo 10 for generating an alternating current power by utilizing kinetic energy of a rotating weight, as explained above in connection with Fig. 1; a switch portion 20 operable to short-circuit output terminals 19 connected to a dynamo coil of the dynamo 10; a controller 30 for controlling the switch portion 20; a rectifying portion 2 for rectifying an alternating current output of the dynamo 10 and outputting it to a charging portion 4; and the charging portion 4 for accumulating therein electric power produced by the dynamo 10. In the power generating device 8 of this embodiment, electric power produced in the form of an electromotive voltage Vg by the dynamo 10 is subject to half-wave rectification by a rectifier diode 2a of the rectifying portion 2. Subsequently, the electric power is charged in the charging portion 4. A large-capacity capacitor 5 constituting the charging portion 4 is charged to a charge voltage Vsc that is output as electric power to the timepiece 7.

The switch portion 20 of this embodiment comprises an n-channel MOSFET 21 serving as a switch which can short-circuit the output terminals 19a and 19b of the dynamo 10. Switch portion 20 also includes a diode 22 connected in series to the MOSFET 21 and arranged in a direction to block a current from flowing in the direction opposite to the rectifying portion 2.

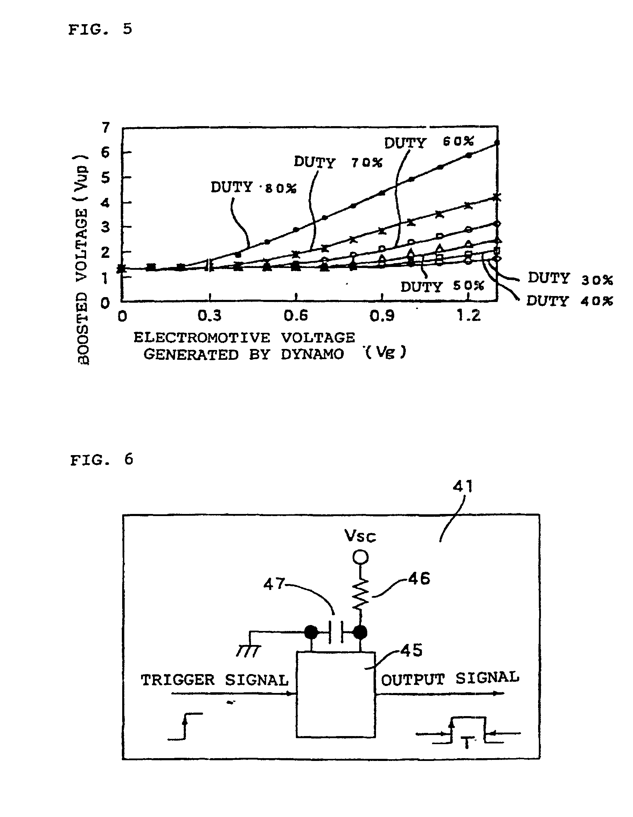

The controller 30 for controlling the switch portion 20 comprises: a chopper control portion 31 for outputting a PWM (Pulse Width Modulation) signal, which is cyclically turned on and off, to the MOSFET 21; a determining portion 32 for determining whether the charging portion 4 can be charged or not with the electromotive voltage Vg of the dynamo 10; and a supply portion 33 for supplying the PWM signal to a gate G of the MOSFET 21 based on a determined result of the determining portion 32. The chopper control portion 31 of this embodiment includes a duty setting portion 41 capable of receiving, from a timing circuit 7a of the timing portion 7, an oscillation signal frequency-divided into a proper frequency and outputting a PWM signal of appropriate duty. The duty setting portion 41 employs, as a trigger, an oscillation output received from a frequency dividing circuit of the timing circuit 7a and outputs the PWM signal having any desired duty ratio. The duty setting portion 41 comprises a monostable multivibrator 45, a resistor 46 and a capacitor 47, by way of example and as shown in Fig. 6. Upon receiving one trigger pulse externally, the duty setting portion 41 outputs one pulse having a certain time width. The width T of the output pulse is a certain time width determined by the time constant of the resistor 46 and the capacitor 47. Accordingly, the duty setting portion 41 can optionally set the output pulse width T with respect to a 1-cycle time width of the oscillation signal received from, e.g., the frequency dividing circuit of the timing circuit 7a and provide the PWM signal of any desired duty ratio.

When the PWM signal, cyclically varying with any desired duty ratio, is supplied to the gate G of the MOSFET 21 of the switch portion 20 based on the result of the determining portion 32 through the supply portion 33 for turning on and off the output of the PWM signal; the connection between the output terminals 19a and 19b of the dynamo 10 is cyclically turned on and off. Therefore, electrical energy generated by the dynamo 10 is stored by the inductance of the dynamo coil 15, and the dynamo coil 15 also serves as a reactor of a boosting chopper circuit. As a result, spike-like electric power with a voltage higher than the normal electromotive voltage Vg can be obtained from the output terminals 19a and 19b. To control the output of the PWM signal, in this embodiment, the supply portion 33 includes an AND circuit 42a and an inverter 42b for amplifying the PWM signal. The inverter 42b functions as drive means for amplifying the PWM signal to a sufficient level to operate the switch portion 20. The inverter 42b may be dispensed with if the level of the PWM signal output from the AND gate 42a is sufficient to operate the switch portion 20.

The determining portion 32 of this embodiment comprises: a sampling portion 35 for sampling a voltage given as the normal electromotive voltage Vg of the dynamo 10; a reference voltage generator 36 for generating a reference voltage Vth to be compared with the sampled voltage; and a comparator 37 for comparing the reference voltage and the sampled voltage. An output signal of the comparator 37 is applied to the AND gate 42a of the supply portion 33 along with the PWM signal. When it is determined that the electromotive voltage Vg is much higher than the charged voltage Vsc, the PWM signal is stopped and the electromotive voltage can be charged without being subject to chopper amplification. The sampling portion 35 of this embodiment receives a voltage Vup on the higher potential side (drain side) of the MOSFET 21 of the switch portion 20. The voltage Vup is divided by two resistors 44a and 44b, and a divided voltage Vupd is applied to an inverted input of the comparator 37. The reference voltage generator 36 comprises a constant voltage diode 45 for generating the reference voltage Vth as a Zener voltage. Generator 36 also includes and a resistor 46 connected in series to the constant voltage diode 45 for limiting a Zener current when the constant voltage diode 45 is electrically conducting. The resistor 46 also functions to pull up the reference voltage Vth to the charged voltage Vsc until the charged voltage Vsc reaches the Zener voltage.

The Zener voltage is set to a value which requires a boosting operation with respect to the charged voltage Vsc of the charging portion 4. The value which requires a boosting operation is preferably set corresponding to a voltage value frequently used in a normal condition based on a charging characteristic of the charging portion 4. Given that voltage value as being Vsc1, a maximum value Vupm of the chopper-boosted voltage Vup sampled by the switch portion 20 is determined by the following formula;

$$Vupm = Vsc1 + Vf(2a) + k \qquad (1)$$

where Vf(2a) is a forward voltage drop across the rectifier diode 2a and k is part of the charged voltage boosted for charging.

The boosted output voltage Vup is divided by the sampling portion 35 depending on the ratio of the resistance 44a to the resistance 44b. The relationship between the output voltage Vth and the boosted output voltage Vup is given by;

$$R(44a) = R(44b) \times [(Vup/Vth) - 1] \qquad (2)$$

$$Vth = Vup \times \{R(44b) / (R(44a) + R(44b))\}$$

$$= Vupd \qquad (3)$$

The voltage dividing ratio of the sampling portion 35 represented by formula (2) is set so that when the boosted output voltage Vup reaches Vupm represented by formula (1), the output voltage Vth of the reference voltage circuit 27 is equal to the output voltage Vupd of the voltage dividing circuit 36 as indicated by formula (3).

More specifically, assuming here that the working voltage Vsc is 1.3 V, the forward voltage drop Vf(2a) across the rectifier diode 2 is 0.2 V, part k of the charged voltage boosted for charging is 0.1 V, and the Zener voltage (Vth) of the constant voltage diode 35 is 0.8 V: the maximum value Vupm of the boosted output voltage is given by 1.3 + 0.2 + 0.1 = 1.6 V and the voltage dividing ratio of the sampling portion 35 is given by R(44a) = R(44b). Therefore, when the boosted output voltage Vup reaches the maximum value Vupm (1.6 V), the voltage Vupd output from the sampling portion 35 becomes 0.8 V, i.e., the same potential as the setting voltage Vth = 0.8 V output from the reference voltage portion 36. Accordingly, when the boosted output voltage Vup exceeds 1.6 V, the output of the comparator 37 is inverted to turn off the AND gate 42a of the supply portion 33, thus stopping the PWM signal from being supplied to the switch portion 20.

In the controller 30 of this embodiment, when the divided voltage Vupd of the boosted voltage Vup reaches the setting voltage Vth, it is judged that the electromotive voltage Vg of the dynamo 10 has a sufficiently large value to permit charging with respect to the working voltage Vsc1 of the charging portion 4. Then, for a large input motion providing such a large electromotive voltage Vg, the output of the dynamo 10 is directly supplied to the charging portion 4 through the rectifying portion 2 without being subject to the chopper boosting. On the other hand, when the divided voltage Vupd does not reach the setting voltage Vth, it is judged that the electromotive voltage Vg of the dynamo 10 does not have a sufficiently large value to permit charging with respect to the working voltage Vsc1 of the charging portion 4. Therefore, the input motion is judged as small and the voltage Vup is boosted under chopper control and then supplied to the charging portion 4.

To sum up the operation of the comparator 37, it compares the voltage Vupd resulting from dividing the boosted output voltage Vup by the sampling portion 35 with the setting voltage Vth of the reference voltage portion 36. When the voltage Vupd resulting from dividing the boosted output voltage Vup has a higher potential than the setting voltage Vth (Vupd > Vth), the comparator 37 judges the input motion as to be large and outputs a low-level signal, whereupon the supply portion 33 is closed and no PWM signal is supplied to the switch portion 20. On the other hand, when the divided output voltage Vupd has a lower potential than the setting voltage Vth (Vupd < Vth), the comparator 37 judges the input motion as small and outputs a high-level signal, whereupon the supply portion 33 is opened and the PWM signal is supplied to the switch portion 20 for chopper amplification.

Further, in the determining portion 32, in a condition where the charged voltage Vsc of the charging portion 4 is lower than the setting voltage Vth and the charging portion 4 is hardly charged with electricity; the constant voltage element 45 is not electrically conducting and hence the setting voltage Vth of the reference voltage portion 36 is the same potential as the charged voltage Vsc of the charging portion 4. When the charged voltage Vsc of the charging portion 4 is low, even the low electromotive voltage Vg generated in the dynamo coil 15 easily exceeds the charged voltage Vsc of the charging portion 4 and can be charged in the charging portion 4 with no need for chopper amplification. Under that condition, the reference voltage generator 36 of this embodiment lowers the setting voltage Vth corresponding to the charged voltage Vsc. Therefore, even when the boosted voltage Vup does not reach the above-mentioned value, the comparator 37 judges the electromotive voltage Vg of the dynamo 10 to be sufficiently high, namely, judges the input motion as large, and stops the supply of the PWM signal to the switch portion 20. Thus, in the controller 30 of this embodiment, energy necessary for driving the switch portion can be reduced by eliminating the chopper control when the electromotive voltage can be charged in the charging portion 4 with no need for chopper amplification. Consequently, the efficiency of power generation is improved.

The rectifying portion 2 of this embodiment carries out half-wave rectification. The controller 30 supplies the PWM signal to the switch portion 20 to short-circuit the MOSFET 21 even when the electromotive voltage having polarities opposite to the rectifying direction is generated. However, since the diode 22 for preventing electrical conduction in the reversed direction is connected in series to the MOSFET 21; the output terminals 19a and 19b are not short-circuited when the electromotive voltage of the dynamo 10 is produced with opposite polarities, thereby avoiding current flow in a non-charging state to brake the motion of the rotor 13, i.e., the motion of the rotating weight. Further, if the output terminals 19a and 19b are short-circuited when the electromotive voltage of the dynamo 10 is produced with opposite polarities; electrical energy generated then is consumed in the form of heat produced by the winding resistance of the dynamo coil 15 and does not contribute to charging of electricity at all. In this embodiment, therefore, the diode 22 for preventing electrical conduction in the reversed direction is disposed to avoid useless consumption of electrical energy caused by switching of the MOSFET 21 and to prevent a lowering of the efficiency of power generation.

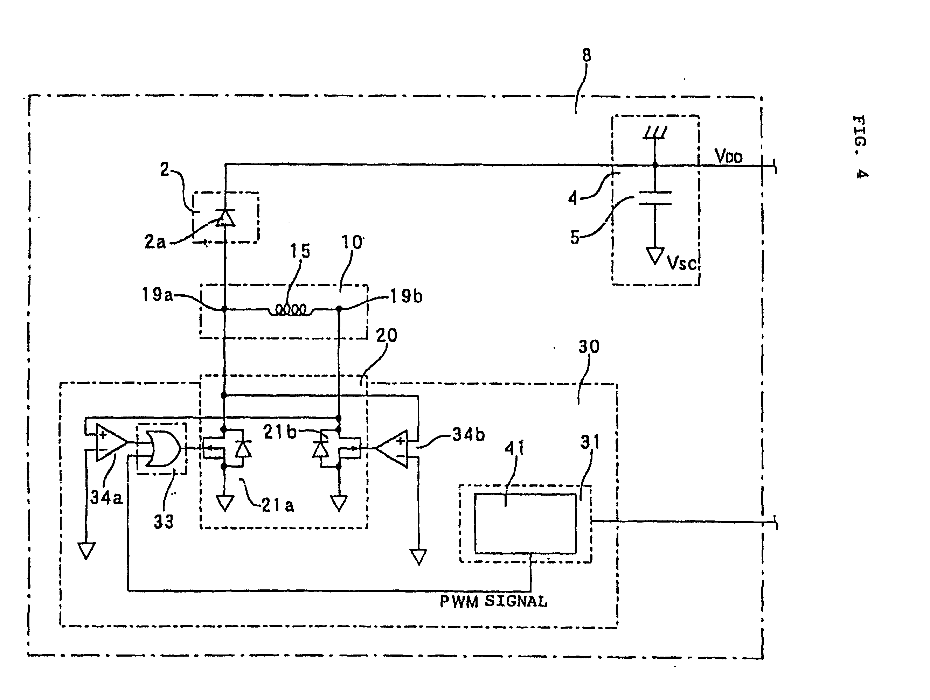

Alternatively, as shown in Fig. 4, the reverse current can also be prevented by providing a pair of polarity determining portions 34a and 34b, each comprising a comparator etc., in the controller 30 to add the function of determining the polarity of the electromotive voltage of the dynamo 10. Further, it is necessary to make open a MOSFET 21b connected to the side 19b of the switch portion 20 opposite to the rectifying portion 2 when the electromotive voltage is produced with opposite polarities to that rectified by the rectifying portion 2. This modification enables the diode 22 for preventing electrical conduction in the reversed direction to be dispensed with. Incidentally, Fig. 4 shows, by way of example, the power generating device 8 with a higher potential Vdd grounded.

Fig. 5 shows calculated results of the electromotive voltage Vg of the dynamo coil 15 and the boosted voltage Vup resulting from chopper control. As explained above, the chopper control is effective in that when the switch portion 20 is electrically conducting, the electromotive voltage Vg generated in the dynamo coil 15 can be accumulated as energy in the inductance of the dynamo coil 15. When the switch portion 21 is not electrically conducting, the energy accumulated in the inductance of the dynamo coil 15 can be superposed on the electromotive voltage Vg to thereby obtain the boosted voltage Vup. If the boosted voltage Vup is sufficiently higher than the charged voltage Vsc of the charging portion 4, the charging portion 4 can be charged even with an electromotive voltage Vg which is lower than the charged voltage Vsc.

Fig. 5 also shows calculated results of the boosted voltage Vup with respect to the electromotive voltage Vg of the dynamo when a duty ratio is varied, representing a proportion of the period during which the switch portion 20 is electrically conducting relative to one cycle of oscillation frequency of the PWM signal used to turn on and off the switch portion 20. The calculation was made on condition that the charged voltage Vsc of the charging portion 4 is set to 1.3 V. As will be seen from Fig. 5, with the PWM signal having a higher duty ratio, the electromotive voltage Vg generated in the dynamo coil 15 can be sufficiently boosted starting from a smaller value. In the chopper control portion 31 of this embodiment, the duty ratio can be set to an optimum value by the duty setting portion 41.

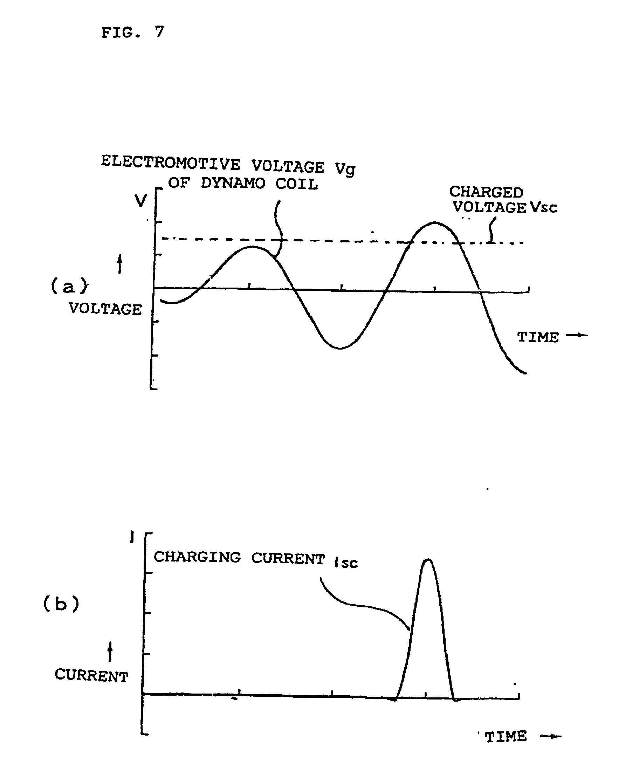

Fig. 7 shows the electromotive voltage Vg of the dynamo coil 15 resulting from the power generating device 8 shown in Fig. 3 when the chopper control is not carried out, i.e., when the switch portion 20 is kept open (Fig. 7(a)). Fig. 7 also shows the charging current Isc charged in the charging portion 4 under the same condition after half-wave rectification made in the rectifying portion 2 (Fig. 7(b)). As shown in Fig. 7, the charging current Isc charged in the charging portion 4 without the chopper control is generated only when the electromotive voltage Vg of the dynamo coil 15 exceeds the charged voltage Vsc of the secondary power supply portion 4, not taking into account the forward voltage Vf across the diode 2a. It is thus understood that when the electromotive voltage Vg generated in the dynamo coil 15 is smaller than the charged voltage Vsc, the kinetic energy used for rotating the dynamo 10 is wasted.

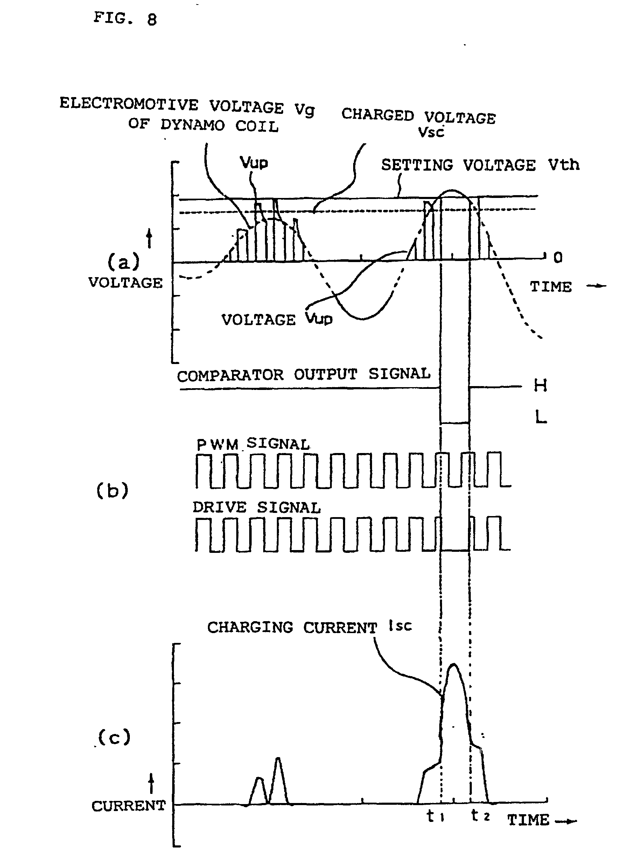

Fig. 8 shows waveforms of respective voltages resulting from the power generating device 8 shown in Fig. 3 when the electromotive voltage is charged under chopper control. In Fig. 8(a), solid lines indicate the voltage (boosted voltage) Vup amplified under the chopper control when the electromotive voltage Vg (indicated by broken lines) of the dynamo coil 15 similar to that shown in. Fig. 7 is obtained. In the power generating device 8 of this embodiment, the PWM signal, shown in Fig. 8(b), supplied from the chopper control portion 31 of the controller 30, is output as a drive signal for the MOSFET 21 through the supply portion 33. The output of the dynamo 10 is chopped by the drive signal into single pulses, thereby providing the voltage Vup boosted through chopper amplification.

Further, as shown in Fig. 8(a), the setting voltage Vth of the determining portion 32 is set to a higher value than the charged voltage Vsc of the charging portion 4. When the boosted voltage Vup reaches the setting voltage Vth, as shown in Fig. 8(b), the output voltage of the comparator 37 is inverted. The supply portion 33 is closed to stop the PWM signal from being output as the drive signal. During the period in which the output voltage of the comparator 37 is inverted, therefore, the switch portion 20 does not perform chopper control and electric power given by the electromotive voltage Vg of the dynamo 10 is output to the charging portion 4.

Fig. 8(c) shows the charging current Isc charged in the charging portion 4 after being subject to the chopper control and the half-wave rectification in the rectifying portion 2. Since the voltage provided from the dynamo terminals provides the boosted voltage Vup through the chopper control, the boosted voltage Vup may exceed the charged voltage Vsc during some period even if the electromotive voltage Vg does not reach the charged voltage Vsc. This causes the charging current Isc to flow during such a period. Compared with the charging current Isc, shown in Fig. 7(b), which results without chopper control; the charging current Isc shown in Fig. 8(c) is increased remarkably. Further, during a period from time t1 to t2, a sufficiently high electromotive voltage Vg is judged to be generated from the fact that the boosted output voltage Vup reaches the setting voltage Vth. During that period, the charging current Isc flows without boosting. Accordingly, the chopper control is stopped, to save electric power consumed by the power generating device 8 itself through the operation of the switch portion 20. The efficiency of charging made in the charging portion 4 is thereby improved.

To explain in more detail the voltage waveforms resulting under chopper control: as the switch portion 20 is electrically conducting or not repeatedly in accordance with a high- or low-level output signal given as the PWM signal; the electromotive voltage Vg is almost 0 because the switch portion 20 is electrically conducting when the PWM signal takes a high level. At this time, a short-circuit current flows through the dynamo coil 15 so that energy is accumulated in the inductance of the dynamo coil 15. Then, because the switch portion 20 is not electrically conducting when the PWM signal takes a low level, the electromotive voltage Vg is output as the boosted voltage Vup resulting from superposing the energy accumulated in the inductance of the dynamo coil 15 on the electromotive voltage Vg. Further, when the output signal of the determining portion 32 becomes a low level for the electromotive voltage Vg itself, it is judged that the input motion of the rotating weight is large and the charging portion 4 can be sufficiently charged with the electromotive voltage Vg at that time. Therefore, the switch portion 20 is made not electrically conducting. The boosted voltage Vup in this case is at the same potential as the electromotive voltage Vg generated in the dynamo coil 15. Thus, the charging operation made in the secondary power supply portion 4 is carried out such that when the electromotive voltage Vg is smaller than the charged voltage Vsc, the charging current flows with the aid of the boosting chopper operation. When the electromotive voltage Vg is larger than the charged voltage Vsc, the boosting chopper operation is ceased and the charging current flows through the normal half-wave rectifier circuit.

By performing the chopper control, as will be seen from the comparison between Fig. 7(b) and Fig. 8 (c), it is possible to achieve charging by using the output power of the dynamo; i.e., the electromotive voltage Vg, which has not been utilized in the past. It is possible to convert a larger part of the kinetic energy of the rotating weight into electrical energy for charging. As a result, the efficiency of power generation and the charging efficiency can be improved. At the same time, by performing chopper control, since the short-circuit current flowing through the dynamo coil 15 applies an appropriate brake to the motion of the rotating weight; the possibility of an overshoot is reduced. This makes it easier for the rotating weight to follow continuous motion of the user's wrist or the like. Therefore, the efficiency of the rotating weight catching kinetic energy can also be improved. Thus, the chopper control improves not only the charging efficiency, but also the efficiency of acquiring kinetic energy that is to be converted into electrical energy.

Consequently, a power generating device 8 and a timing device 1 having a very high power generating ability can be provided.

Second Embodiment

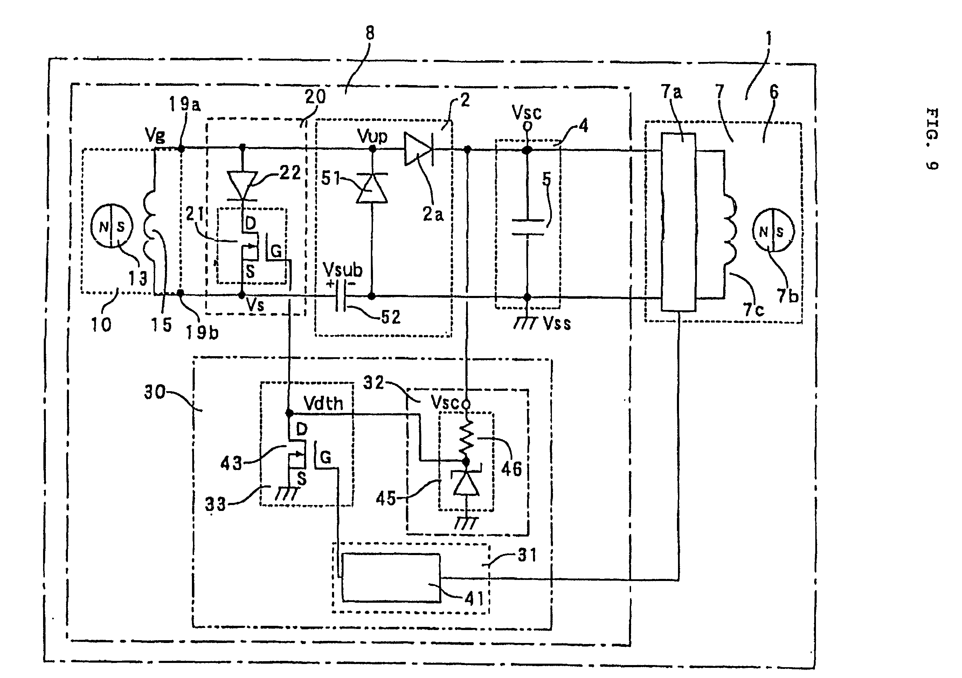

Fig. 9 shows a different embodiment in which the present invention is applied to a timing device. A timing device 1 of this embodiment also comprises a power generating device 8 and a functioning unit 6 capable of operating by electric power supplied from the power generating device 8, i.e., a timepiece 7. The power generating device 8 of this embodiment is basically similarly constructed as that explained above, and comprises: a dynamo 10; a switch portion 20 capable of short-circuiting between both terminals 19a and 19b of a dynamo coil 15 of the dynamo 10; a controller 30 for controlling the switch portion 20; a rectifying portion 2; and a charging portion 4. Hence, common components to those in the first embodiment are denoted by the same reference numerals and are not explained here.

In the power generating device 8 of this embodiment, the rectifying portion 2 includes, in addition to a diode 2a for half-wave rectification, a diode 51 for voltage doubling rectification and a capacitor 52 for voltage doubling. When the electromotive voltage Vg generated in the dynamo 10 has the same potential polarity as the ground side (Vss), the voltage doubling diode 51 is electrically conducting to charge the voltage doubling capacitor 52 with the electromotive voltage Vg. When the electromotive voltage Vg has the same polarity as the higher potential side (Vsc), the voltage charged in the voltage doubling capacitor 52 is added to the electromotive voltage Vg and the resulting sum is output to the charging portion 4. In other words, assuming that the voltage charged in the voltage doubling capacitor 52 is Vsub, when the electromotive voltage Vg has the same polarity as the higher potential side next time, there is produced a combined potential of the charged voltage Vsub previously charged in the voltage doubling capacitor 52 and the electromotive voltage Vg. In this case the rectifier diode 2a is electrically conducting to charge electricity in a large-capacity capacitor 5 in the charging portion 4. At this time, the voltage doubling diode 51 is back-biased and not electrically conducting because it is applied with voltage directed from the cathode side to the anode side due to the polarity of the electromotive voltage Vg and the charged voltage Vsub. Thus, the rectifying portion 2 of this embodiment serves as a voltage doubling rectifier circuit which can provide an output voltage twice the potential of the electromotive voltage Vg by combining the two electromotive voltages Vg which are alternately output with different polarities.

Further, the power generating device 8 of this embodiment includes the switch portion 20 similarly to the above-explained power generating device. It can chopper-amplify the electromotive voltage Vg having the same polarity as the higher potential side. As with the above-explained power generating device, therefore, the electromotive voltage Vg having the same potential polarity as the higher potential side can be boosted to the boosted voltage Vup and then supplied to the rectifying portion 2. When the electromotive voltage Vg has the polarity opposite to the higher potential side, the chopper amplification is not carried out. This is because a diode 21 for preventing electrical conduction in the reversed direction is provided in the switch portion 20, causing the voltage doubling capacitor 52 to be charged with the electromotive voltage Vg. Since the voltage doubling capacitor 52 is discharged for each cycle, the charged voltage Vsub will never become higher than the electromotive voltage Vg. Thus, the voltage doubling capacitor 52 can be charged with the electromotive voltage Vg without the need for chopper amplification.

As with the above embodiment, the controller 30 of this embodiment includes, in a chopper control portion 31, a duty setting portion 41 capable of outputting a PWM signal by the use of an oscillation signal output from a timing circuit 7a. The PWM signal is supplied to a gate G of a MOSFET 21 of the switch portion 20 for the chopper control, as a drive signal, via a supply portion 33 which is operated in response to a signal from a determining portion 32. The determining portion 32 of this embodiment employs the same circuit as the above-mentioned the reference voltage generator 32 and outputs a setting voltage Vdth based on the Zener voltage of a constant voltage diode 45. The setting voltage Vdth is applied to a drain D of an n-channel MOSFET 43 constituting the selecting portion 33. The n-channel MOSFET 43 has a source S connected to the ground side, with the drain D connected to the reference voltage Vdth and the gate G of the n-channel MOSFET 21 in the switch portion 20. The PWM signal from the duty setting portion 41 is supplied to the gate G of the MOSFET 43. When the PWM signal takes a high level, the drain D and the source S of the MOSFET 43 are electrically conducting to each other, causing the gate G of the MOSFET 21 in the switch portion 20 to have a low level. On the other hand, When the PWM signal takes a low level, the MOSFET 43 in the supply portion 33 is not electrically conducting, whereupon the setting voltage Vdth is applied to the gate G of the MOSFET 21 in the switch portion 20.

The n-channel MOSFET 21 in the switch portion 20 is a switching element of the voltage-driven type that a resistance value between the drain D and the source S is changed from infinite $\Omega$ to several m$\Omega$ depending on the voltage applied between the gate G and the source S. The resistance value lowers in proportion to the voltage applied between the gate G and the source S. When turning on the MOSFET 21, the voltage applied between the gate G and the source S is required to be set to such a value as enables a current to flow in sufficient amount to the drain G. A threshold voltage VGSth between the gate G and the source S represents the voltage between the gate G and the source S at which a drain current is not larger than a certain prescribed current value. Further, it can be equivalently thought that a capacitor with input capacity Ciss is formed between the gate G and the source S of the MOSFET 21. By charging electricity in the input capacity Ciss to provide a voltage value not lower than the threshold voltage VGSth, the drain D and the source S of the MOSFET 21 can be made electrically conducting to each other.

In the power generating device 8 of this embodiment, because of the voltage doubling rectifier circuit being used in the rectifying portion 2, a voltage Vs at the source S of the MOSFET 21 becomes the same as the charged voltage Vsub of the voltage doubling capacitor 52. The charged voltage Vsub of the voltage doubling capacitor 52 has a value which reflects the electromotive voltage Vg of the dynamo 10 and is different depending on the magnitude of an input motion of the rotating weight for driving the dynamo 10. Specifically, the charged voltage Vsub is provided as a charged voltage having a large value corresponding to the electromotive voltage Vg, which is generated by the dynamo coil 15 and has the same polarity as the lower potential side, when a large input motion is applied to the rotating weight. It is provided as a small charged value when the input motion is small. Further, with the low potential side of the charging portion 4 grounded, this is equivalent to a condition in which the source voltage Vs of the MOSFET 21 is given an offset potential corresponding to the charged voltage Vsub of the voltage doubling capacitor 52.

Accordingly, whether the switch portion 20 is to carry out the chopper control or not can be controlled by using the charged voltage Vsub. For charging the input capacity Ciss of the n-channel MOSFET 21 with a voltage not less than VGSth, the reference voltage Vdth is set as follows:

$$Vdth > Vsub + VGSth \qquad (4)$$

From the equation (4), it is seen that, to make the drain D and the source S of the N-channel MOSFET 21 electrically conducting to each other, a potential difference between the reference voltage Vdth applied from the driving MOSFET 43 and the charged voltage Vsub of the voltage doubling capacitor 52 is required to have a larger value than the value of the threshold VGSth. In other words, since the threshold VGSth and the setting value Vdth are fixed, the switch portion 20 carries out the chopper control when the charged voltage Vsub meets the following condition:

$$Vsub < Vdth - VGSth \qquad (4)'$$

Because the charged voltage Vsub of the voltage doubling capacitor 52 has a potential varying to a large extent depending on the input motion of the rotating weight, the equation (4)' cannot be met if the value of Vsub is increased relative to the preset value of Vdth. In this case, the MOSFET 21 is not turned on and is kept off although the PWM signal is supplied to the gate G thereof. Accordingly, the chopper control is not carried out and electric power given by the electromotive voltage Vg is supplied to the rectifying portion 2. Thus, the setting voltage Vdth can be set, by way of example, so that when the electromotive voltage Vg is smaller than the working voltage Vsc1 of the charging portion 4, the chopper control is carried out to boost the electromotive voltage Vg. Also, when the electromotive voltage Vg is larger than the working voltage Vsc1, the chopper control is not carried out and the electromotive voltage is charged through only normal voltage doubling rectification.

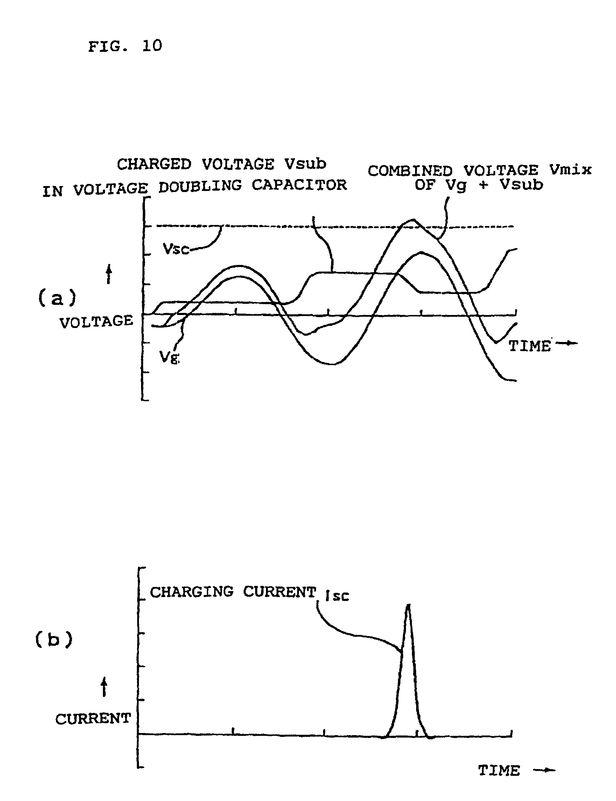

Fig. 10 shows waveforms of respective voltages and currents in the power generating device 8 of this embodiment when the electromotive voltage is charged through the voltage doubling rectification without operating the switch portion 20 and carrying out the chopper control. When the electromotive voltage Vg generated in the dynamo coil 15 provides electric power having the same polarity as the lower potential side, the voltage Vsub charged in the voltage doubling capacitor 52 is increased. At this time, the voltage doubling capacitor 52 has such a polarity relation that a terminal of the voltage doubling capacitor 52 connected to the lower potential side of the charging portion 4 has a lower potential, as shown in Fig. 9. Accordingly, electric power given by the electromotive voltage Vg having the same polarity as the higher potential side next time coincides in polarity with the voltage Vsub previously charged in the voltage doubling capacitor 52; hence electric power given by a combined voltage Vmix of the electromotive voltage Vg and the charged voltage Vsub is now applied to the charging portion 4. As shown in Fig. 10(b), however, the charging current Isc is generated only when the combined voltage Vmix exceeds the charged voltage Vsc. In spite of having the function of voltage doubling rectification, therefore, when the combined voltage Vmix does not reach the charged voltage Vsc of the charging portion 4, the electric power generated by the dynamo 10 is not supplied to the charging portion 4. Kinetic energy of the rotating weight for driving the dynamo 10 is consumed uselessly or impedes conversion of continuous motion of the user into kinetic energy.

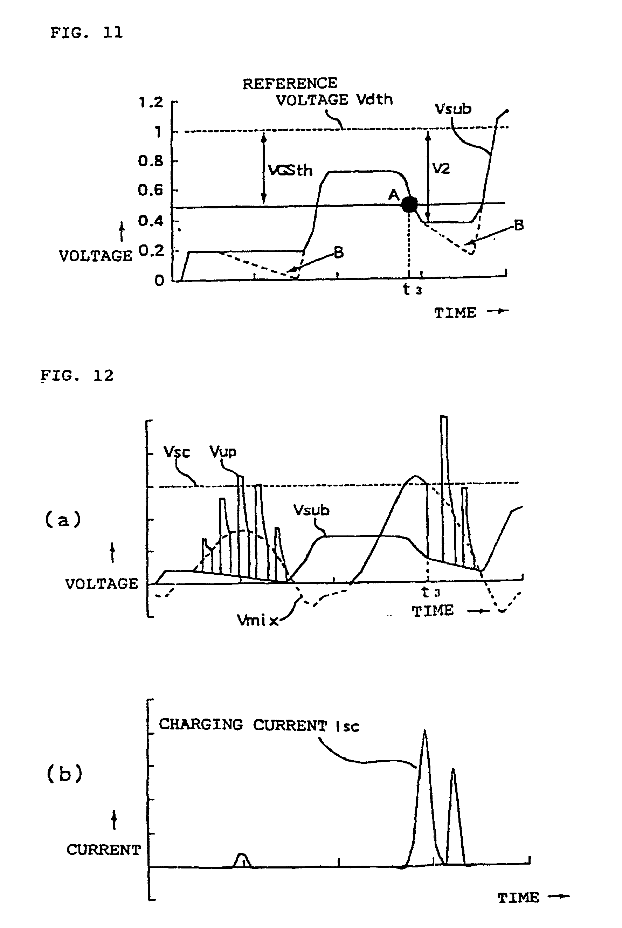

The waveform of the charged voltage Vsub of the voltage doubling capacitor 52 is extracted and shown in Fig. 11. Assuming that threshold VGSth of the n-channel MOSFET 21 in the switch portion 20 is 0.5 V and the setting voltage Vdth applied to the driving MOSFET 43 is 1 V, when the input motion applied to the rotating weight is small (in the range of small values of Vsub), the charged voltage Vsub does not reach a value given by subtracting the threshold VGSth from the setting voltage Vdth. In that range, therefore, the chopper control is turned on and the MOSFET 21 in the switch portion 20 is turned on/off cyclically in accordance with the PWM signal for the chopper amplification. On the other hand, when the charged voltage Vsub increases upon charging in the voltage doubling capacitor 52 and exceeds the value given by subtracting the threshold VGSth from the setting voltage Vdth, the MOSFET 21 is not turned on and the chopper amplification is not performed.

Then, when the electromotive voltage Vg having the same polarity as the higher potential side is output from the dynamo 10, it is subject to the voltage doubling rectification in the rectifying portion 2 and the resulting electric power is supplied to the charging portion 4. At this time, the voltage doubling capacitor 52 is gradually discharged. When the charged voltage Vsub is lowered below the value given by subtracting the threshold VGSth from the setting voltage Vdth at the time t3, the switch portion 20 starts chopper operation and electric power given by the boosted voltage Vup instead of the electromotive voltage Vg is now supplied to the rectifying portion 2. Accordingly, the voltage Vmix supplied to the charging portion 4 is increased from (Vg + Vsub) to (Vup + Vsub), and when it exceeds the charged voltage Vsc of the charging portion 4, the charging current Isc flows.

Figs. 12(a) and 12(b) show respectively behaviors of the voltage supplied to the charging portion 4 and the charging current Isc flowing into the charging portion 4 when the chopper function is effected in the power generating device 8 of this embodiment. As seen from Figs. 12(a) and 12(b), if the charged voltage Vsub of the voltage doubling capacitor 52 is low when electric power is supplied to the charging portion 4 through the voltage doubling rectification, the voltage Vup boosted by the chopper amplification is output after being superposed on Vsub. As a result, during some period, the output voltage does not exceed the charged voltage Vsc even with the voltage doubling rectification, but it exceeds the charged voltage Vsc with the chopper boosting. Accordingly, as is apparent from comparison with Fig. 10(b), the charging current Isc can be increased remarkably by carrying out the chopper control. Also, as with the first embodiment explained above, there can be obtained advantages, for example, that an appropriate brake is applied to the rotating weight under the chopper control and the rotating weight can more easily catch kinetic energy.

Further, since the charging current Isc is increased under the chopper control, the electrical energy that has just been accumulated in the voltage doubling capacitor 52 and not supplied to the charging portion 4 can be utilized for charging. This lowers the charged voltage Vsub of the voltage doubling capacitor 52 as indicated by dotted lines B in Fig. 11. Therefore, the charged voltage Vsub is dropped down below the value given by subtracting the threshold VGSth from the setting voltage Vdth and the chopper amplification is performed in a longer period. Thus, in this embodiment, by employing the charged voltage Vsub as a parameter for judging whether the electromotive voltage Vg can be charged in the charging portion 4, it is possible to more reliably determine whether the electromotive voltage can be charged in the charging portion 4 after being subject to the voltage doubling boosting.

Additionally, a reference voltage generator 32 for outputting the setting voltage Vdth is constructed similarly to that explained above. In this embodiment, therefore, when the charged voltage Vsc does not reach the setting voltage Vdth, the charged voltage Vsc is output as the setting voltage Vdth. This makes it possible to prevent electric power from being consumed by switching for the chopper control while even a low electromotive voltage Vg can be charged when the charged voltage Vsc is low. Hence, the efficiency of power generation is further improved.

Third Embodiment

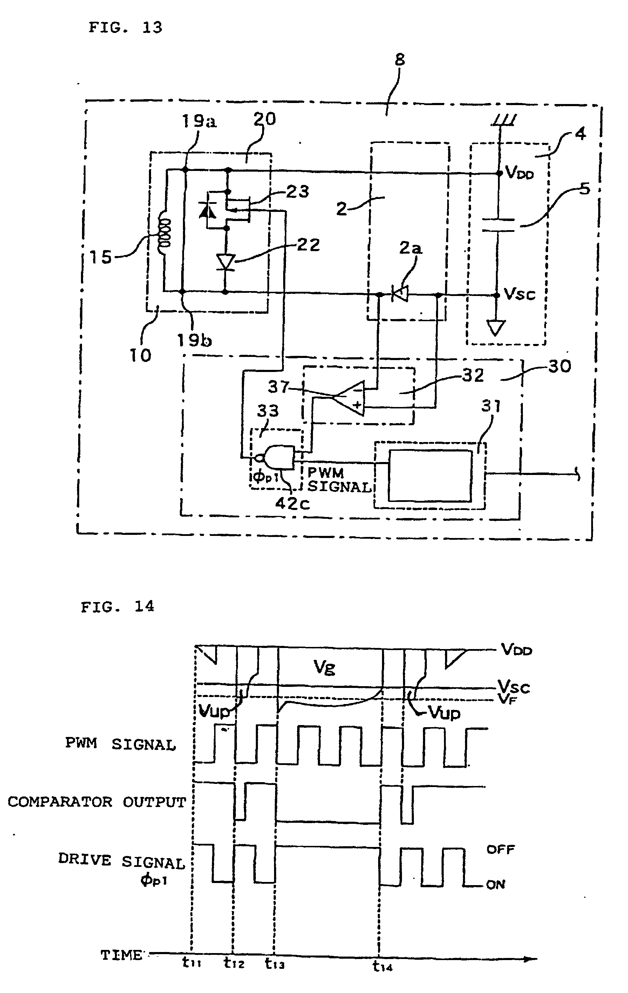

Fig. 13 shows a different embodiment of the power generating device of the present invention. A power generating device 8 of this embodiment can also drive a functioning device such as a timing device by electric power supplied therefrom. The power generating device 8 of this embodiment is basically similarly constructed as that explained above, and comprises: a dynamo 10; a switch portion 20 capable of short-circuiting between both terminals 19a and 19b of a dynamo coil 15 of the dynamo 10; a controller 30 for controlling the switch portion 20; a rectifying portion 2; and a charging portion 4. Hence, common components to those in the above embodiment are denoted by the same reference numerals and are not explained here.

While the lower potential side (Vss side) is grounded in the circuit explained above, the higher potential side (Vdd side) is grounded to provide a reference potential in the power generating device 8 of this embodiment. Except that point, the power generating device 8 of this embodiment is substantially of the same construction as the power generating device of the half-wave rectification type explained in connection with the first embodiment. Note that, in the following description of this embodiment, the magnitude of voltages is stated in terms of absolute value.

The controller 30 of this embodiment comprises: a chopper control portion 31 including a duty setting portion 41 to output a PWM signal; a determining portion 32 for determining whether the charging portion 4 can be charged or not with the electromotive voltage Vg of the dynamo 10, and a supply portion 33 for supplying the PWM signal to the switch portion 20 based on a determined result of the determining portion 32. The determining portion 32 of this embodiment includes a comparator 37 for detecting a potential across a rectifier diode 2a of the rectifying portion 2. When a charging current flows through the rectifier diode 2a, an output of the comparator 37 is inverted to a low level. As a result, the supply portion 33 including a NAND circuit 42c outputs, instead of the PWM signal for the chopper control, a high-level drive signal Np1 for turning off the switch portion 20 including a p-channel MOSFET 23.

Fig. 14 shows, in the form of a timing chart, one example of control for the power generating device 8 of this embodiment. When one cycle of half-wave rectification starts at the time t11, the electromotive voltage Vg generated by the dynamo 10 is chopper-amplified in accordance with the PWM signal supplied from the switch portion 20. When a resulting boosted voltage Vup exceeds a value given by the sum of a charged voltage Vsc of the charging portion 4 and a forward voltage Vf across the rectifier diode 2a at the time t12, a charging current Isc flows through the rectifier diode 2a. At the time t12, therefore, the output of the comparator 37 is inverted to a low level to stop the delivery of the PWM signal. However, if the low-level output of the comparator 37 is completed within the period during which the drive signal Np1 is at a high level (the MOSFET 23 is turned off) (i.e., if the output of the comparator 37 is shifted from a low level to a high level again in that period), the output of the comparator 37 takes a high level and the boosting operation is continuously carried out under the chopper control. This is because no current flows through the rectifier diode 2a in the period during which the drive signal Np1 is at a low level (the MOSFET 23 is turned on).

On the other hand, when the electromotive voltage Vg becomes higher than the charged voltage Vsc after a current flows through the rectifier diode 2a at the time t13, whereupon the output of the comparator 37 is inverted to a low level to stop the delivery of the PWM signal; a current flows through the rectifier diode 2a even in the period during which the drive signal Np1 is at a low level (the MOSFET 23 is turned on). At this time, the comparator 37 continues to output a low level, the PWM signal is totally inhibited, and the charging current is allowed to flow without the chopper control. Accordingly, the output of the comparator 37 remains at a low level and the chopper control is not carried out. It is therefore possible to save electric power consumed by the switching operation during that period. When, at the time t14, the electromotive voltage Vg is below the sum of the charged voltage Vsc and the forward voltage Vf, or the charged voltage Vsc rises to such an extent that the sum of itself and the forward voltage Vf exceeds the electromotive voltage Vg; the output of the comparator 37 turns to a high level. Accordingly, the PWM signal is supplied to the switch portion 20 again to resume the chopper control, and the boosted voltage Vup is supplied to the charging portion 4.

Thus, in the power generating device 8 of this embodiment, whether the electromotive voltage Vg can be charged in the charging portion 4 or not is determined based not on methods of comparing any voltages, such as the electromotive voltage Vg and the boosted voltage Vup, with a certain setting voltage, but on a method of judging whether the charging current actually flows or not. The latter method also makes it possible to properly carry out on/off control for the chopper control, and to prevent electric power from being overly consumed by the power generating device itself due to excessive chopping. Also, as explained before, since the speed of the rotating weight for driving the dynamo 10 is not too reduced, a continuous motion of the user's wrist or the like can be effectively caught for conversion into kinetic energy and the efficiency of power generation can be improved.

Of course, the circuit configuration of the determining portion in this embodiment is not limited to one for half-wave rectification. The present invention is also applicable to power generating devices using rectifying portions of the above-stated voltage doubling rectification type or of the full-wave rectification type.

Fourth Embodiment

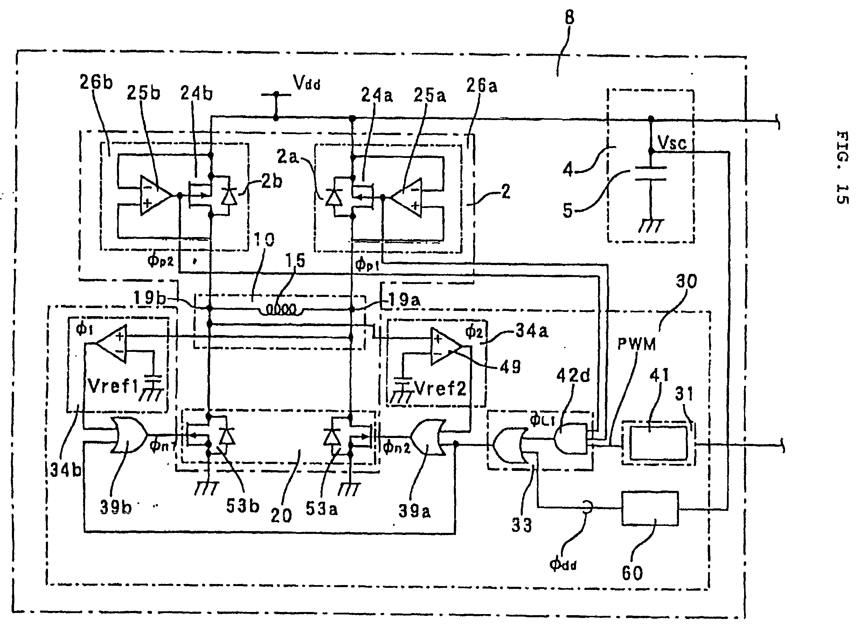

Fig. 15 shows a further different embodiment of the power generating device of the present invention. A power generating device 8 of this embodiment is basically similarly constructed as that explained above, and comprises: a dynamo 10; a switch portion 20 capable of short-circuiting between both terminals 19a and 19b of a dynamo coil 15 of the dynamo 10; a controller 30 for controlling the switch portion 20; a rectifying portion 2; and a charging portion 4. Hence, common components to those in the above embodiment are denoted by the same reference numerals and are not explained here.

The rectifying portion 2 of the power generating device 8 of this embodiment is constituted by a full-wave rectifier circuit including rectifier diodes 2a and 2b arranged on the higher potential (Vdd) side of the output terminals 19a and 19b, respectively, and rectifier switches 53a and 53b arranged on the lower potential (ground) side of the output terminals 19a and 19b, respectively. The rectifier switches 53a and 53b serve also as the switch portion 20 for short-circuiting. The rectifier switches 53a and 53b each comprise an n-channel MOSFET and are turned on when respective electromotive voltages Vg at the output terminals 19b, 19a, (i.e., on the opposite sides to the output terminals 19a, 19b to which the switches 53a and 53b are connected) are determined to be higher than reference voltages Vref2, Vref1 by the polarity determining portions 34a and 34b of the controller 30, thereby forming rectifier circuits.

P-channel MOSFETs 24a and 24b are connected in parallel to the rectifier diodes 2a and 2b in bypassing relation, respectively, and are turned on when respective comparators 25a and 25b determine that the diodes 2a and 2b are electrically conducting. Thus, since the bypass switches 24a and 24b are turned on once the charging current flows through the rectifier diodes 2a and 2b, losses due to forward voltages across the diodes 2a and 2b can be avoided. In the following description, a unit made up of a combination of one rectifier diode and one bypass switch is called a unidirectional unit 26. In this embodiment, whether the charging current occurs or not can be determined based on outputs of the comparators 25a and 25b of the unidirectional units 26. Therefore, comparator outputs Np1 and Np2 are used to effect the function of a determining portion in the controller 30 to determine whether the electromotive voltage Vg has become a charging-enable voltage or not.

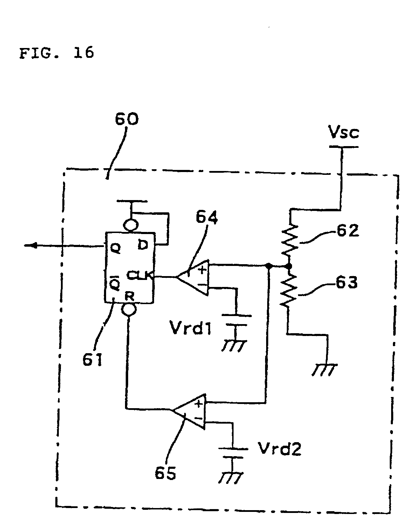

The controller 30 of this embodiment employs outputs of comparators as unidirectional elements to effect the function of the determining portion. In addition, it includes a chopper control portion 31 for supplying a PWM signal and a supply portion 33. The controller 30 of this embodiment further includes the polarity determining portions 34a and 34b for determining the polarity of the electromotive voltage Vg output from the dynamo 10 by using the above-mentioned comparators 49. It includes a charged voltage determining portion 60 capable of determining whether the charged voltage Vsc is an overvoltage or not. The charged voltage determining portion 60 is to determine whether charging of electricity in the charging portion 4 has progressed or not to such an extent that the charged voltage Vsc reaches the withstand voltage of a capacitor 5 or the withstand voltage of a functioning device, such as a timing device, connected to the power generating device 8. The charged voltage determining portion 60 can be constituted by, e. g., a circuit shown in Fig. 16. The circuit shown in Fig. 16 employs a D flip-flop 61. More specifically, the charged voltage Vsc is divided by resistances 62 and 63. The divided voltage is compared in a comparator 64 with a setting voltage Vrd1 adapted for determining that the charged voltage is an excessive voltage and the charging is to be stopped. It is compared in a comparator 65 with a setting voltage Vrd2 adapted for determining that the charged voltage is not an excessive voltage and the charging is to be resumed.

When the voltage given by dividing the charged voltage Vsc reaches the setting voltage Vrd1, the flip-flop 61 is set to output a high-level signal. Thereupon the MOSFETs 53a and 53b of the switch portion 20, serving also as part of the rectifying portion 2, are turned on through the supply portion 33. This makes the output terminals 19a and 19b of the dynamo 10 short-circuited, enabling the dynamo 10 to stop electric power from being output therefrom. Accordingly, even though kinetic energy is applied to the rotating weight, electric power is not supplied to the charging portion 4 and the charging is not progressed. As a result, the charged voltage Vsc can be prevented from rising. On the other hand, when the electric power in the charging portion 4 is consumed by the functioning device such as the timing portion and the charged voltage Vsc drops to such an extent that the divided voltage is lower than the setting voltage Vrd2, the flip-flop 61 is reset. The MOSFETs 53a and 53b are thereby made free to be used for the rectification or chopper amplification.

The supply portion 33 for supplying the PWM signal to the switch portion 20 includes a 3-input AND circuit 42d to which are applied the PWM signal and the outputs of the comparators 25a and 25b of the unidirectional units 26a and 26b. When the comparator 25a or 25b detects the charging current flowing through the corresponding diode 2a or 2b, a comparator output Np1 or Np2 takes a low level to prevent the PWM signal from being output as a drive signal NL1. The drive signal NL1 is input to an OR circuit 42e along with an output signal Ndd of the charged voltage determining portion 60. This produces a drive signal NL2 which takes a high level if one of the two inputs to the OR circuit 42e becomes a high level.

The drive signal NL2 is input to OR circuits 39a and 39b along with respective outputs N2, N1 of the polarity determining portions 34a and 34b, which outputs are used for making the associated MOSFETs 53a and 53b perform the rectifying operation. As a result, the MOSFETs 53a, 53b turned off for rectification are brought into chopper control to output the voltage Vup boosted by chopper amplification; or are turned on to short-circuit for stopping the power generation when the charged voltage Vsc is an overvoltage.

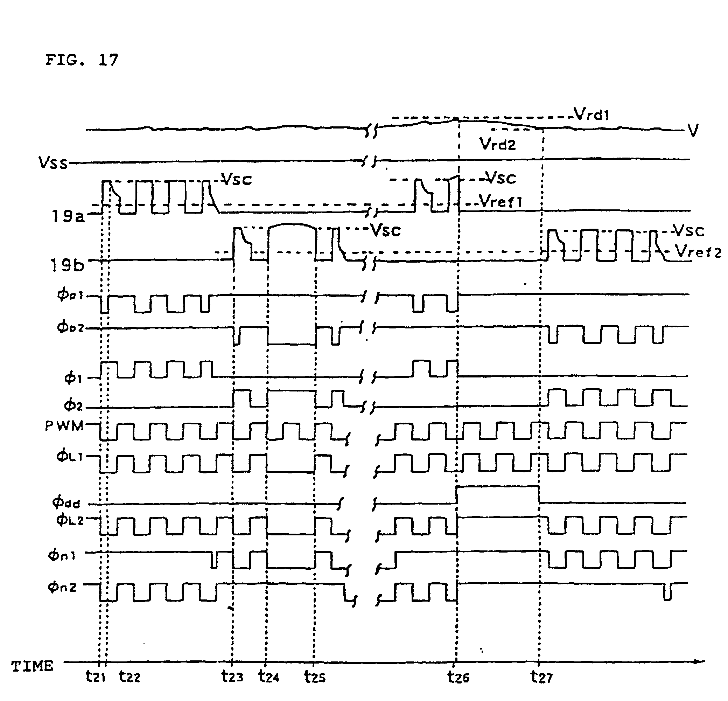

Fig. 17 shows, in the form of a timing chart, one example of control for the power generating device 8 of this embodiment. At the time t21, a rectifying cycle starts with the electromotive voltage Vg having one polarity. When the output voltage at the dynamo terminal 19a reaches the setting voltage Vref1, the output N1 of the comparator 49 of the polarity determining portion 34b turns to a high level. This causes a drive signal Nml for the switch 53b to have a high level. The switch 53b is thereby turned on to form the rectifier circuit for rectifying electric power given by the electromotive voltage Vg having one polarity. In the rectifying portion 2 of the power generating device 8 of this embodiment, by determining the polarity of the electromotive voltage Vg with the polarity determining portions 34a and 34b, the full-wave rectification (which has been performed through a bridge made up of four rectifier diodes in the past), can be performed with the switches. It is therefore possible to reduce losses caused by forward voltages across the diodes and to increase the efficiency of charging by the dynamo 10.

A signal Nn2 for driving the other switch 53a of the paired rectifier switches repeats turning-on/off cyclically in accordance with the PWM signal. As a result, the output terminals 19a and 19b of the dynamo are short-circuited repeatedly through the switches 53a and 53b, thereby carrying out the chopper control. Accordingly, a boosted voltage appears at the output terminal 19a. When the boosted voltage exceeds the charged voltage Vsc at the time t22, a charging current flows through the rectifier diode 2a. At the same time, the output Np1 of the comparator 25a of the unidirectional unit 26a turns to a low level and the unidirectional unit 26a is turned on. Accordingly, the charging current can be supplied while bypassing the rectifier diode 2a and a loss caused by the forward voltage across the diode 2a can be eliminated. Therefore, if a boosted voltage Vup slightly larger than the charged voltage Vsc is produced through the chopper amplification, resulting electric power can be charged in the charging portion 4. When the unidirectional unit 26a is turned on, the supply of the PWM signal from the supply portion 33 is stopped. However, if the period during which the chopper amplification is stopped is completed within the period during which the PWM signal is at a low level (the FET 53a or 53b is turned off) (i.e., if the output of the unidirectional unit 26a is shifted from an off-level to an on-level in that period), the PWM signal is continuously output to carry out the chopper boosting. This is because the electromotive voltage Vg does not reach the charged voltage Vsc within the period during which the PWM signal is at a high level (the FET 53a or 53b is turned on).

At the time t23, a rectifying cycle starts for electric power produced by the electromotive voltage Vg having the other polarity. When the electromotive voltage Vg at the output terminal 19b reaches the setting voltage Vref2, the comparator output N2 of the polarity determining portion 34a turns to a high level, causing a drive signal Nn2 for the switch 53a to have a high level. The switch 53a is thereby turned on to form the rectifier circuit. Accordingly, the drive signal Nn1 for the switch 53b on the opposite side repeats turning-on/off cyclically in accordance with the PWM signal, thereby carrying out the chopper control. At the time t24, a charging current flows due to a voltage boosted through the chopper amplification, whereupon the unidirectional unit 26b is turned on. Therefore, the output Np2 of the comparator 25b of the unidirectional unit 26b turns to a low level. Thus, the PWM signal is stopped and both the drive signals NL1 and NL2 have a low level. Hence, the drive signal Nn1 for the switch 53a turns to a low level and is held off. This condition continues for a period during which the electromotive voltage Vg is higher than the charged voltage Vsc, and the chopper control is not carried out. When the electromotive voltage Vg exceeds below the charged voltage Vsc at the time t25, the unidirectional unit 25b is turned and the chopper control is resumed.

As a result of continuing the charging in such a manner, when the charged voltage Vsc (although the divided voltage of the charged voltage Vsc is used for comparison in this embodiment, Vsc is assumed to be directly used for comparison here for the sake of simplicity) reaches the setting voltage Vrd1 adapted for determining at time t26 whether the charged voltage is an overvoltage or not; the signal Ndd from the overvoltage determining portion 60 turns to a high level. Therefore, the drive signal NL2 takes a high level, whereupon the drive signals Nn1 and Nn2 also take a high level. Accordingly, the switches 53a and 53b are turned on to short-circuit between the output terminals 19a and 19b. As a result, no electric power is output from the output terminals 19a and 19b and the charging is ceased.

When the charged voltage Vsc gradually lowers and at the time t27 reaches the setting voltage Vrd2 at which the charging is to be resumed, the signal Ndd from the overvoltage determining portion 60 turns to a low level and the drive signals Nn1 and Nn2 take respective values in accordance with the other conditions. Accordingly, when the electromotive voltage Vg is low, the chopper control is carried out and the charging is resumed with the boosted voltage.

It is a matter of course that while the fourth embodiment is constructed to carry out the chopper amplification through switching made by the N-channel MOSFETs on the Vss side; the configuration of the control circuit may be reversed upside down to realise the power generating device of the type using P-channel MOSFETs on the Vdd side for switching.

With the power generating device 8 according to the present invention, as explained above, both ends of the dynamo coil 15 of the dynamo 10 are cyclically connected and disconnected to provide a voltage boosted through chopper amplification. Therefore, even when an input to the dynamo 10 is small and the electromotive voltage Vg is insufficient to charge the charging portion 4, the charging portion 4 can be charged with the chopper-boosted voltage Vup if it is boosted to a sufficient level. Accordingly, even when an input to the dynamo 10 is small, kinetic energy of the input can be converted into electrical energy and stored. Hence a power generating device having high efficiency of power generation and high charging efficiency can be provided. Further, selecting chopper boosting as a boosting method provides another merit in that an appropriate charging brake can be applied to the rotating weight. Experiments made by the inventors of this application prove that, as a result of using, e.g., the power generating device of the full-wave type, shown as the fourth embodiment of the present invention; a charging current 20 or more times that obtainable with the full-wave rectifier circuit using a diode bridge can be obtained.

Of course, the above-explained circuits of the power generating device according to the present invention are given only by way of example, and the present invention is not limited to those circuits. Also, the power generating device of the present invention is not limited in its applications to a wrist-fittable timing device. It is also applicable to various kinds of equipment such as devices fitted on the user's legs or mounted on moving bodies, (e.g., vehicles) to generate electric power upon rotors being rotated by vibrations or the like of the moving bodies. The functioning device capable of operating with electric power supplied from the power generating device of the present invention is not limited to the timing device mentioned above. It includes, e.g., information terminals such as pagers, telephones, wireless units, hearing aids, pedometers, calculators, and electronic pocketbooks, as well as IC cards and radio receivers. By employing the power generating device of the present invention in such portable equipment; it is possible to efficiently generate electric power by catching motions of the human body; suppress consumption of a battery; and eliminate the need of a battery itself. Accordingly, the user can use such portable equipment without feeling anxiety about exhaustion of a battery. It is also possible to avoid such a trouble that the data stored in a memory is lost upon exhaustion of a battery. Further, the function of electronic equipment can be developed even in districts or places where batteries or chargers are hard to obtain, or even in the case where it is difficult to replace batteries because of disasters or the like.

As described hereinabove, according to the power generating device of the present invention; even when the electromotive voltage generated in the dynamo coil is too small to exceed the charged voltage of the charging portion, it can be boosted by carrying out the chopper control to such an extent that the boosted voltage can be charged in the charging portion, resulting in improved efficiency of power generation. Further, even when motion of the rotating weight for applying mechanical power to the dynamo is a continuous motion, the rotating weight is prevented from overshooting or being subject to a unnecessary charging brake. As a result, a power generating device capable of efficiently converting acquired kinetic energy into electrical energy can be provided.

By providing the function of determining whether the charging portion can be charged with the electromotive voltage without being boosted, unnecessary chopper control can be avoided and electric power otherwise consumed by switching operation or the like can be saved. This leads to further improved efficiency of power generation in practice.

Further, the switch portion for carrying out the chopper control can be designed to function also as a bypassing circuit for overcoming an overly charged state, and a number of functions can be realised with simple circuits. Also, by employing the unidirectional unit and so forth, loss caused by the forward voltage across a diode can be reduced. This contributes to providing the power generating device with higher efficiency of power generation and higher charging efficiency.

Thus, by using the power generating device of the present invention, charging of electricity can be achieved very efficiently by catching the user's motion or the like. Therefore, if the power generating device of the present invention is employed as, e.g., a power supply for timing devices, the timing device is kept from stopping its operation while the user is carrying it, even when the user's motion is small. Consequently, the timing device with good operating performance in a user-carrying condition and high reliability can be provided.

## Claims

1. A power generating device (8) comprising:

   a power generating portion (9) including a dynamo coil (15) and having output terminals (19a, 19b),
   a switch portion (20),
   a controller (30) having a chopper control function capable of cyclically turning on/off said switch portion (20),
   a rectifying portion (2) for rectifying the output of said power generating portion (9), and
   a charging portion (4) capable of accumulating the rectified electric power, **characterised by**; said switch portion (20) being capable of short-circuiting said output terminals (19a, 19b) of said power generating portion (9).

2. The power generating device according to Claim 1, wherein said controller (30) has a polarity determining function capable of determining the polarity of an electromotive voltage of said power generating portion (9).

3. The power generating device according to Claim 1, wherein said switch portion (20) allows a current to flow in one direction.

4. The power generating device according to Claim 1, wherein said controller (30) has a determining function for determining the electromotive voltage of said power generating portion (9), and stops said chopper control function when said charging portion (4) can be charged with the electromotive voltage of said power generating portion (9).

5. The power generating device according to Claim 4, wherein said determining function compares the electromotive voltage of said power generating portion (9) with the charged voltage of said charging portion (4).

6. The power generating device according to Claim 4, wherein said determining function compares the electromotive voltage of said power generating portion (9) with a first setting voltage at which the electromotive voltage is judged to be able to effect charging.

7. The power generating device according to Claim 4, wherein said determining function determines the electromotive voltage of said power generating portion (9) by detecting a voltage drop in a power supply circuit with respect to said charging portion (4).

8. The power generating device according to Claim 1, wherein said controller (30) has a determining function for determining a charged voltage of said charging portion (4), and turns on said switch portion (20) when said charged voltage exceeds a second setting voltage beyond which said charged voltage is judged to be excessive.

9. The power generating device according to Claim 1, wherein said rectifying portion (2) performs full-wave rectification by a combination of rectifier diodes (2a, 2b) and rectifier switches (53a, 53b) connected upstream and downstream of output terminals (19a, 19b) of said power generating portion (9), and

    said controller (30) has a polarity determining function capable of determining the polarity of an electromotive voltage of said power generating portion (9), and can control said rectifier switch (53a, 53b) of said rectifying portion (2) on the off-side to serve as said switch portion (20).

10. The power generating device according to Claim 1, wherein said rectifying portion (2) includes a rectifier diode (2a) and a bypass switch (24a, 24b) bypassing said rectifier diode (2a).

11. A timing device comprising the power generating device according to Claim 1 and a timing portion (7) capable of operating by electric power supplied from said charging portion (4).

12. The timing device according to Claim 11, wherein said controller (30) performs said chopper control by using part of oscillation signals for said timing portion (7).

13. A charging method for accumulating electric power generated by a power generating portion (9) including a dynamo coil (15) in a charging portion (4) through a rectifying portion (2), said method **characterised by**:

    a chopper-amplifying step of cyclically turning on/off a switch portion (20) thereby short-circuiting the output terminals (19a, 19b) of said power generating portion (9), when a electromotive voltage of said power generating portion (9) does not reach a voltage being able to effect charging.

14. The charging method according to Claim 13, further comprising a step of turning on said switch portion (20) when a charged voltage of said charging portion (4) is judged to be excessive.

15. The charging method according to Claim 13, wherein, in said chopper-amplifying step, said switch portion (20) is operated by using part of oscillation signals for a timing portion (7) which can operate by electric power supplied from said charging portion (4).

## Patentansprüche

1. Stromerzeugungsvorrichtung (8), umfassend:

    einen Stromerzeugungsabschnitt (9), der eine Dynamospule (15) enthält und Ausgangsanschlüsse (19a, 19b) aufweist,
    einen Schaltabschnitt (20),
    eine Steuervorrichtung (30), die eine Wechselrichtersteuerfunktion aufweist, die den Schaltabschnitt (20) zyklisch ein- und ausschalten kann,
    einen Gleichrichterabschnitt (2) zum Gleichrichten des Ausgangs des Stromerzeugungsabschnitts (9), und
    einen Ladeabschnitt (4), der fähig ist, die gleichgerichtete elektrische Leistung zu akkumulieren,

**dadurch gekennzeichnet, daß**
    der Schaltabschnitt (20) die Ausgangsanschlüsse (19a, 19b) des Stromerzeugungsabschnitts (9) kurzschließen kann.

2. Stromerzeugungsvorrichtung nach Anspruch 1, bei der die Steuervorrichtung (30) eine Polarität-Ermittlungsfunktion aufweist, die fähig ist, die Polarität einer elektromotorischen Spannung des Stromerzeugungsabschnitts (9) zu ermitteln.

3. Stromerzeugungsvorrichtung nach Anspruch 1, bei der der Schaltabschnitt (20) einem Strom in einer Richtung zu fließen erlaubt.

4. Stromerzeugungsvorrichtung nach Anspruch 1, bei der die Steuervorrichtung (30) eine Ermittlungsfunktion zum Ermitteln der elektromotorischen Spannung des Stromerzeugungsabschnitts (9) aufweist und die Wechselrichtersteuerfunktion stoppt, wenn der Ladeabschnitt (4) mit der elektromotorischen Spannung des Stromerzeugungsabschnitts (9) geladen werden kann.

5. Stromerzeugungsvorrichtung nach Anspruch 4, bei der die Ermittlungsfunktion die elektromotorische Spannung des Stromerzeugungsabschnitts (9) mit der Ladespannung des Ladeabschnitts (4) vergleicht.

6. Stromerzeugungsvorrichtung nach Anspruch 4, bei der die Ermittlungsfunktion die elektromotorische Spannung des Stromerzeugungsabschnitts (9) mit einer ersten Einstellspannung vergleicht, bei der festgestellt wird, daß die elektromotorische Spannung fähig ist, das Laden zu bewirken.

**7.** Stromerzeugungsvorrichtung nach Anspruch 4, bei der die Ermittlungsfunktion die elektromotorische Spannung des Stromerzeugungsabschnitts (9) ermittelt, indem sie einen Spannungsabfall in einer Stromversorgungsschaltung bezüglich des Ladeabschnitts (4) erfaßt.

**8.** Stromerzeugungsvorrichtung nach Anspruch 1, bei der die Steuervorrichtung (30) eine Ermittlungsfunktion zum Ermitteln einer Ladespannung des Ladeabschnitts (4) aufweist und den Schaltabschnitt (20) einschaltet, wenn die Ladespannung eine zweite Einstellspannung überschreitet, jenseits der die Ladespannung als überhöht beurteilt wird.

**9.** Stromerzeugungsvorrichtung nach Anspruch 1, bei der der Gleichrichterabschnitt (2) eine Vollwellengleichrichtung mittels einer Kombination von Gleichrichterdioden (2a, 2b) und Gleichrichterschaltern (53a, 53b), die stromaufseitig und stromabseitig der Ausgangsanschlüsse (19a, 19b) des Stromerzeugungsabschnitts (9) angeschlossen sind, durchführt, und

die Steuervorrichtung (30) eine Polarität-Ermittlungsfunktion aufweist, die die Polarität einer elektromotorischen Spannung des Stromerzeugungsabschnitts (9) ermitteln kann und die Gleichrichterschalter (53a, 53b) des Gleichrichterabschnitts (2) auf der Aus-Seite so steuern kann, daß sie als Schaltabschnitt (20) dienen.

**10.** Stromerzeugungsvorrichtung nach Anspruch 1, bei der der Gleichrichterabschnitt (2) eine Gleichrichterdiode (2a) und einen Umgehungsschalter (24a, 24b), der die Gleichrichterdiode (2a) umgeht, enthält.

**11.** Zeitmeßvorrichtung, die die Stromerzeugungsvorrichtung nach Anspruch 1 und einen Zeitmeßabschnitt (7) umfaßt, der mittels der vom Ladeabschnitt (4) zugeführten elektrischen Leistung betrieben werden kann.

**12.** Zeitmeßvorrichtung nach Anspruch 11, bei der die Steuervorrichtung (30) die Wechselrichtersteuerung unter Verwendung eines Teils der Oszillationssignale des Zeitmeßabschnitts (7) durchführt.

**13.** Ladeverfahren zum Akkumulieren von elektrischer Leistung, die von einem Stromerzeugungsabschnitt (9) erzeugt wird, der eine Dynamospule (15) enthält, in einem Ladeabschnitt (4) über einen Gleichrichterabschnitt (2), wobei das Verfahren **gekennzeichnet ist durch**:

einen Wechselrichter-Verstärkungsschritt zum zyklischen Ein- und Ausschalten eines Schaltabschnitts (20), um somit die Ausgangsanschlüsse (19a, 19b) des Stromerzeugungsabschnitts (9) kurzzuschließen, wenn eine elektromotorische Spannung des Stromerzeugungsabschnitts (9) keine Spannung erreicht, die fähig ist, das Aufladen zu bewirken.

**14.** Ladeverfahren nach Anspruch 13, das ferner den Schritt des Einschaltens des Schaltabschnitts (20) umfaßt, wenn eine Ladespannung des Ladeabschnitts (4) als überhöht beurteilt wird.

**15.** Ladeverfahren nach Anspruch 13, bei dem im Wechselrichter-Verstärkungsschritt der Schaltabschnitt (20) unter Verwendung eines Teils der Oszillationssignale von einem Zeitmeßabschnitt (7) betrieben wird, der mittels der vom Ladeabschnitt (4) gelieferten elektrischen Leistung betrieben werden kann.

## Revendications

**1.** Dispositif de production d'énergie (8) comprenant :

une partie de production d'énergie (9) comprenant une bobine de dynamo (15) et ayant des bornes de sortie (19a, 19b),
une partie de commutation (20),
une unité de commande (30) ayant une fonction de commande de découpage susceptible de mettre en/hors fonction ladite partie de commutation (20) de manière cyclique,
une partie de redressement (2) pour redresser la sortie de ladite partie de production d'énergie (9), et
une partie de charge (4) susceptible d'accumuler l'énergie électrique redressée, **caractérisée en ce que** :

ladite partie de commutation (20) est susceptible de court-circuiter lesdites bornes de sortie (19a, 19b) de ladite partie de production d'énergie (9).

**2.** Dispositif de production d'énergie selon la revendication 1, dans lequel ladite unité de commande (30) a une fonction de détermination de polarité susceptible de déterminer la polarité d'une tension électromotrice de ladite partie de production d'énergie (9).

**3.** Dispositif de production d'énergie selon la revendication 1, dans lequel ladite partie de commutation (20) permet à un courant de s'écouler dans un sens particulier.

**4.** Dispositif de production d'énergie selon la revendication 1, dans lequel ladite unité de commande (30) a une fonction de détermination pour déterminer la tension électromotrice de ladite partie de production d'énergie (9), et arrête ladite fonction de commande de découpage quand ladite partie de charge (4) peut être chargée par la tension électromotrice de ladite partie de production d'énergie (9).

**5.** Dispositif de production d'énergie selon la revendication 4, dans lequel ladite fonction de détermination compare la tension électromotrice de ladite partie de production d'énergie (9) à la tension chargée de ladite partie de charge (4).

**6.** Dispositif de production d'énergie selon la revendication 4, dans lequel ladite fonction de détermination compare la tension électromotrice de ladite partie de production d'énergie (9) à une première tension de réglage à laquelle on détermine que la tension électromotrice est susceptible d'effectuer une charge.

**7.** Dispositif de production d'énergie selon la revendication 4, dans lequel ladite fonction de détermination détermine la tension électromotrice de ladite partie de production d'énergie (9) en détectant une chute de tension dans un circuit d'alimentation en énergie en ce qui concerne ladite partie de charge (4).

**8.** Dispositif de production d'énergie selon la revendication 1, dans lequel ladite unité de commande (30) a une fonction de détermination pour déterminer une tension chargée de ladite partie de charge (4), et met en fonction ladite partie de commutation (20) quand ladite tension chargée dépasse une seconde tension de réglage au-delà de laquelle ladite tension chargée est jugée comme étant excessive.

**9.** Dispositif de production d'énergie selon la revendication 1, dans lequel ladite partie de redressement (2) effectue un redressement sur les deux alternances par une combinaison de diodes de redressement (2a, 2b) et de commutateurs de redressement (53a, 53b) reliés en amont et en aval des bornes de sortie (19a, 19b) de ladite partie de production d'énergie (9), et

ladite unité de commande (30) a une fonction de détermination de polarité susceptible de déterminer la polarité d'une tension électromotrice de ladite partie de production d'énergie (9), et peut commander lesdits commutateurs de redressement (53a, 53b) de ladite partie de redressement (2) côté commande pour servir en tant que dite partie de commutation (20).

**10.** Dispositif de production d'énergie selon la revendication 1, dans lequel ladite partie de redressement (2) comprend une diode de redressement (2a) et un commutateur de contournement (24a, 24b) contournant ladite diode de redressement (2a).

**11.** Dispositif de synchronisation comprenant le dispositif de production d'énergie selon la revendication 1 et une partie de synchronisation (7) susceptible de fonctionner par une énergie électrique fournie en provenance de ladite partie de charge (4).

**12.** Dispositif de synchronisation selon la revendication 11, dans lequel ladite unité de commande (30) effectue ladite commande de découpage en utilisant une partie de signaux d'oscillation pour ladite partie de synchronisation (7).

**13.** Procédé de charge pour l'accumulation d'énergie électrique produite par une partie de production d'énergie (9) comprenant une bobine de dynamo (15) dans une partie de charge (4) par l'intermédiaire d'une partie de redressement (2), ledit procédé étant **caractérisé par** :

une étape d'amplification-découpage pour mettre en/hors fonction une partie de commutation (20) de manière cyclique, court-circuitant de ce fait les bornes de sortie (19a, 19b) de ladite partie de production d'énergie (9), quand une tension électromotrice de ladite partie de production d'énergie (9) n'atteint pas une tension susceptible d'effectuer une charge.

**14.** Procédé de charge selon la revendication 13, comprenant de plus une étape de mise en fonction de ladite partie de commutation (20) quand une tension chargée de ladite partie de charge (4) est jugée comme étant excessive.

**15.** Procédé de charge selon la revendication 13, dans lequel, dans ladite étape d'amplification-découpage, ladite partie de commutation (20) est mise en oeuvre en utilisant une partie de signaux d'oscillation pour une partie de synchronisation (7) qui peut fonctionner par une énergie électrique fournie en provenance de ladite partie de charge (4).

FIG. 1

FIG. 2

180° UPPERMOST

11

(a)

180° UPPERMOST

(b)

11

0°

180° UPPERMOST

11

A

(c)

B

0°

FIG. 3

FIG. 4

EP 0 862 262 B1

PWM SIGNAL

FIG. 5

FIG. 6

FIG. 7

ELECTROMOTIVE VOLTAGE Vg
OF DYNAMO COIL

CHARGED
VOLTAGE Vsc

(a)

V

VOLTAGE

TIME →

(b)

I

CHARGING CURRENT Isc

CURRENT

TIME →

FIG. 8

ELECTROMOTIVE VOLTAGE Vg
OF DYNAMO COIL       CHARGED VOLTAGE
Vsc

Vup          SETTING VOLTAGE Vth

(a)
VOLTAGE                                    0

TIME →

VOLTAGE Vup

COMPARATOR OUTPUT SIGNAL                   H

L

PWM SIGNAL

(b)

DRIVE SIGNAL

CHARGING CURRENT Isc

(c)

↑
CURRENT                         t₁    t₂   TIME →

26

FIG. 9

FIG. 10

(a) CHARGED VOLTAGE Vsub IN VOLTAGE DOUBLING CAPACITOR
COMBINED VOLTAGE Vmix OF Vg + Vsub
Vsc
VOLTAGE
Vg
TIME →

(b) CHARGING CURRENT Isc
CURRENT
TIME →

FIG. 11

FIG. 12

(a)

(b)

29

EP 0 862 262 B1

FIG. 13

FIG. 14

FIG. 15

FIG. 16

FIG. 17